# EUROPÄISCHE PATENTANMELDUNG

(11) **EP 3 922 343 A1**
(43) Veröffentlichungstag der Anmeldung: **15.12.2021**
(21) Anmeldenummer: 21160562.1
(22) Anmeldetag: 03.03.2021
(51) Int. Cl.: B01D 53/26, F17D 1/05

(54) **GASDRUCKREGELANLAGE, ENTFEUCHTUNGSEINRICHTUNG FÜR EINE GASDRUCKREGELANLAGE UND VERFAHREN ZUM BETREIBEN EINER GASDRUCKREGELANLAGE**

(30) Priorität: 09.06.2020 DE 102020115301
(71) Anmelder: EnBW Energie Baden-Württemberg AG, 76131 Karlsruhe (DE)
(72) Erfinder: Wissmann, Rolf, 71334 Waiblingen (DE)
(74) Vertreter: RPK Patentanwälte Reinhardt, Pohlmann und Kaufmann Partnerschaft mbB

(57) **Zusammenfassung**

Die Erfindung betrifft Gasdruckregelanlage (100) mit einer Belüftungsvorrichtung (170) zur Zufuhr eines Belüftungsfluides (200), insbesondere Umgebungsluft, sowie einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasstrom bestimmungsgemäß von der Hochdruckleitung (130) in die Niederdruckleitung (150) strömt und ein Gasdruck des Gasstroms in der Hochdruckleitung (130) größer ist als ein Gasdruck des Gasstroms in der Niederdruckleitung (150), wobei beim Übergang des Gasstroms von der Hochdruckleitung (130) in die Niederdruckleitung (150) eine Entspannungskälte entsteht. Die Belüftungsvorrichtung (170) und die Niederdruckleitung (150) sind mit einer Wärmetauschanordnung (180) so gekoppelt, dass die Entspannungskälte eine Verminderung des Feuchtegehalts des Belüftungsfluides (200) im Bereich der Belüftungsvorrichtung (170) bewirkt.

Die Erfindung betrifft zudem ein Verfahren zum Betreiben einer solchen Gasdruckregelanlage (100) sowie eine Entfeuchtungseinrichtung (400) für eine Gasdruckregelanlage (100).

## Beschreibung

### Technisches Gebiet

Die Erfindung betrifft eine Gasdruckregelanlage und eine Entfeuchtungseinrichtung für eine Gasdruckregelanlage sowie ein Verfahren zum Betreiben einer solchen Gasdruckregelanlage.

### Stand der Technik

Aus Platzgründen und ökonomischen Gründen lagern viele brennbare Gase unter hohen Drücken. Dies trifft insbesondere auch auf den rohrleitungsgebundenen Transport von Gasen zu. Häufig ist das Druckniveau für die Nutzung und Weiterverarbeitung der Gase sehr viel geringer als der Lager- oder Transportdruck. Aus diesem Grund werden die Gase üblicherweise in Gasdruckregelanlagen von hohem Druck auf einen niedrigeren Druck entspannt.

Korrespondierende Gasdruckregelanlagen mit einer Hochdruckleitung einer Niederdruckleitung und einem strömungsmäßig zwischen der Hochdruckleitung und der Niederdruckleitung angeordneten Regelanordnung sind in zahlreichen Variationen bekannt. In diesen Gasdruckregelanlagen strömt ein Gasstrom von der Hochdruckleitung in die Niederdruckleitung, wobei ein Gasdruck des Gasstroms in der Hochdruckleitung größer ist als ein Gasdruck des Gasstroms in der Niederdruckleitung. Zudem sind Verfahren zum Betreiben einer solchen Regelanalage bekannt.

Des Weiteren ist bekannt, dass sich die meisten Gase infolge des Joule-Thomson-Effektes bei der Druckreduzierung proportional zur Druckdifferenz abkühlen. Die Abkühlung des Gases bei der Expansion bzw. bei der Druckreduzierung kann diverse technische Probleme mit sich bringen. Beispielsweise können die Regelanordnung oder nachfolgende Niederdruckleitungen vereisen. Zudem kann sich in Abhängigkeit von Druck und Temperatur bei Anwesenheit von Wasser ein Hydrat bilden, welches zu einer Verstopfung von Niederdruckleitungen und oder von Elementen der Regelanordnung führen kann. Um die unerwünschten Effekte einer Gasabkühlung zu vermeiden oder zu vermindern und um die Abkühlung des Gases zu kompensieren, kann das Gas vor oder auch nach der Entspannung erwärmt werden. Beispielsweise kann die Wärme in die Hochdruckleitung, in die Niederdruckleitung und an bzw. in Elemente der Regelanordnung geleitet werden.

Zudem sind Entfeuchtungseinrichtungen für Gasdruckregelanlagen bekannt. Beispielsweise kann eine bekannte Entfeuchtungseinrichtung als stromloser Raumentfeuchter ausgeführt werden und einen mit einem Granulat befüllten Behälter umfassen. Das Granulat kann aus Calciumchlorid oder einen anderen Stoff bestehen, welcher die Fähigkeit hat der Raumluft Feuchte zu entziehen. Auf diese Weise kann der Raumluft Wasser entzogen werden. Ein Auffangbehälter kann das korrespondierende Kondenswasser sammeln.

Gasdruckregelanlagen umfassen zudem eine Belüftungsvorrichtung zur Zufuhr eines Belüftungsfluides. Diese Belüftungsvorrichtungen sind üblicherweise vorgeschrieben, um eine gefährliche explosionsfähige oder zündfähige Atmosphäre zu vermeiden.

Aus der DE 10 2004 063 841 B4 ist eine gattungsgemäße Gasdruckregelanlage zur Erdgasentspannung und zur Klimakälteerzeugung bekannt, welche eine Gasentspannungsmaschine und einen nachfolgend angeordneten Nachwärmer umfasst, wobei der Nachwärmer in einen Solekreislauf mit Solepumpe und Binärerzeuger eingebunden ist. Eine Heizung und ein Vibrationssensor mit einer Regeleinrichtung sind derart an der Gasentspannungsmaschine vorgesehen, dass die Vereisung der Gasentspannungsmaschine mittels des Vibrationssensors detektierbar und über die geregelte Heizung abbaubar ist. Die zumindest teilweise gefrorene Sole kann aus dem Solekreislauf entnommen und zu einer Klimaanlage transportiert werden, welche die gespeicherte Kälte in der Sole zur Klimatisierung an ihrem Standort nutzt.

Aus der DE 101 51 321 B4 ist eine Gasdruckregelanlage mit einem Gasdruckregler bekannt. Ein Wirbelrohr ist in einem äußeren Rohrkörper derart integriert, dass sich zwischen den Wirbelrohraußenwänden und dem äußeren Rohrkörper ein Warmgaskanal bildet, in den ein aus dem Wirbelrohr austretender Warmgasstrom zur Umhüllung eines Kaltgasstromes gelenkt wird. Der Warmgasstrom erwärmt den korrespondierenden äußeren Rohrkörper.

Aus der US 2012 0192580 A1 ist ein Gasabgabesystem mit einem Ventil mit einer temperaturabhängigen Steuerung bekannt. Das Ventil verwendet ein Temperaturmessgerät, um die Temperatur des Erdgases nach dem Passieren eines Expansionsventils und nach dem Verlassen eines Wärmetauschers innerhalb der Entladestation zu messen. Dieses Temperaturmessgerät sendet ein Signal an das Ventil, das automatisch betätigt wird. Ist die Temperatur des Gases zu niedrig, wird das Ventil geschlossen, wodurch sich die Verweilzeit im Wärmetauscher verlängert und die Gastemperatur steigt. Wenn die Gastemperatur zu hoch ist, wird das Ventil geöffnet, wodurch sich die Verweilzeit im Wärmetauscher verringert und die Gastemperatur sinkt.

Aus der EP 1 865 249 B1 ist ein Gasdruckminderer zum Senken eines Gasdrucks in einem Verteilungssystem für Erdgas bekannt. Der Gasdruckminderer umfasst mindestens eine Gasexpansionsvorrichtung, um ein Entspannen des Gases zu ermöglichen und gleichzeitig dadurch den Druck zu reduzieren. Zudem umfasst der Gasdruckminderer mindestens ein Mittel zur Erhöhung der Gastemperatur in der Umgebung der Gasexpansionsvorrichtung. Hierbei ist das Mittel zur Erhöhung der Gastemperatur ein innen eingebauter, mit Diesel- oder Biokraftstoff betriebener Verbrennungsmotor.

### Offenbarung der Erfindung

Die Aufgabe der Erfindung ist es, eine Gasdruckregelanlage zu schaffen, welche weniger anfällig für Beschädigungen durch die Bildung von Kondenswasser, Korrosion und Vereisung ist.

Eine weitere Aufgabe der Erfindung ist es, eine Entfeuchtungseinrichtung für eine solche Gasdruckregelanlage anzugeben, welche mit einfachen Mitteln eine Reduzierung eines Feuchtegehalts eines Belüftungsfluides bewirkt.

Eine weitere Aufgabe der Erfindung ist es, ein Verfahren zum Betreiben einer solchen Gasdruckregelanlage anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Aufgabe wird nach einem Aspekt der Erfindung bei einen Gasdruckregelanlage dadurch gelöst, dass eine Belüftungsvorrichtung und eine Niederdruckleitung mit einer Wärmetauschanordnung so gekoppelt sind, dass eine Entspannungskälte eine Reduzierung eines Feuchtegehalts eines Belüftungsfluides im Bereich der Belüftungsvorrichtung bewirkt.

Hierdurch kann zumindest der Feuchtegehalt in der Atmosphäre innerhalb der Gasdruckregelanlage reduziert werden. Ferner kann vorteilhaft gezielt festgelegt werden, an welcher Stelle etwaiges Kondenswasser auftritt. Dies vermindert die Gefahr, dass sich dieses an unerwünschter Stelle ansammelt und unerwünschterweise etwa zu Rostschäden oder bei tiefen Temperaturen zur Eisbildung in der Gasdruckregelanlage führt.

Unter einer Gasdruckregelanlage wird im Folgenden eine Anordnung mit der Belüftungsvorrichtung zur Zufuhr des Belüftungsfluides, sowie einer Hochdruckleitung, der Niederdruckleitung und einer strömungsmäßig zwischen der Hochdruckleitung und der Niederdruckleitung angeordneten Regelanordnung verstanden. Ein Gasstrom strömt in bestimmungsgemäßem Betrieb von der Hochdruckleitung über die Regelanordnung in die Niederdruckleitung. Hierbei ist ein Gasdruck des Gasstroms in der Hochdruckleitung größer als ein Gasdruck des Gasstroms in der Niederdruckleitung. Beim Einströmen des Gasstroms in die Niederdruckleitung entsteht durch die Druckreduzierung eine Entspannungskälte. Die Hochdruckleitung, die Niederdruckleitung und die strömungsmäßig zwischen der Hochdruckleitung und der Niederdruckleitung angeordnete Regelanordnung sind in einem Raum angeordnet, wobei die Belüftungsvorrichtung den Raum mit dem Belüftungsfluid insbesondere mit Umgebungsluft belüftet.

Die Quelle der Umgebungsluft kann ein weiterer Raum oder eine Außenumgebung sein. Eine Entlüftungsvorrichtung entlüftet den Raum mit der Gasdruckregelanlage, um Gasansammlungen aus dem Raum auszuleiten.

Unter der Regelanordnung kann eine Baugruppe verstanden werden, welche den Gasdruck des Gasstroms einstellt. Die Regelanordnung kann hierbei wenigstens ein Ventil umfassen.

In vorteilhafter Weise kühlt die von der Wärmetauschanordnung auf die Belüftungsvorrichtung übertragene Entspannungskälte den Belüftungsfluidstrom ab. Dadurch kann das Belüftungsfluid bereits in der Belüftungsvorrichtung im Wesentlichen auf eine Temperatur abgekühlt sein, welche ungefähr im Bereich der Niederdruckleitung und im Bereich der Regelanordnung herrscht.

Hierbei kondensiert ein Teil der Feuchtigkeit im Belüftungsfluidstrom bereits in der Belüftungsvorrichtung aus dem Belüftungsfluid aus. Dadurch weist der Belüftungsfluidstrom nach dem Ausströmen des Belüftungsfluidstroms aus der Belüftungsvorrichtung einen reduzierten Feuchtegehalt auf, welcher unerwünschter Weise an der Niederdruckleitung, an der Regelanordnung und in anderen Bereichen des Raumes kondensieren könnte. Dadurch kann auf eine zusätzliche Beheizung der Regelanordnung oder der Niederdruckleitung auf eine Temperatur oberhalb einer Taupunkttemperatur des Belüftungsfluidstroms verzichtet werden.

Die Bildung von Kondenswasser und/oder Raureif und/oder Eis an einer Außenseite der Niederdruckleitung und/oder an einer Außenseite der Regelanordnung ist durch die reduzierte Feuchtigkeit im Belüftungsfluidstrom und durch den reduzierten Feuchtegehalt im Raum zumindest erschwerbar oder sogar ganz vermeidbar.

Durch den reduzierten Feuchtegehalt des Belüftungsfluidstroms können ein Auskondensieren derselben an der Außenseite der Regelanordnung und/oder an der Außenseite der Niederdruckleitung sowie eine Korrosion und andere aus Nässe und Feuchtigkeit resultierende Schäden der jeweiligen Außenseite vermieden oder zumindest erschwert werden. Zudem kann durch den reduzierten Feuchtegehalt ein Einfrieren von beweglichen Elementen der Regelanordnung erschwert oder vermieden werden.

Dadurch können funktionsbeeinträchtigende Beschädigungen vermeidbar und eine Funktionsdauer der Niederdruckleitung und/oder eine Funktionsdauer der Regelanordnung verlängerbar sein.

Der verbleibende Feuchtegehalt des aus der Belüftungsvorrichtung ausströmenden Belüftungsfluidstroms ist von der zugeführten Entspannungskälte und von der Umgebungstemperatur abhängig. Hierbei kann der Wert des verbleibenden Feuchtegehalts abgeschätzt oder vorgegeben werden, so dass der in den Raum eingebrachte Feuchtegehalt und der daraus resultierende Feuchtegehalt im Raum ebenfalls abschätzbar oder vorgebbar sind. Da ein geringerer Feuchtegehalt über den Belüftungsfluidstrom in den Raum einbringbar ist, herrscht auch im Raum eine geringere Luftfeuchtigkeit als ohne Entfeuchtung des Belüftungsfluidstroms. Die erzielte Luftfeuchtigkeit im Raum kann beispielsweise im Bereich von 30% bis 50% liegen. Der Feuchtegehalt ist günstigerweise in einem Bereich, der einerseits gering genug ist, das Auskondensieren von Wasser im Raum zu unterbinden und andererseits groß genug ist, unerwünschte statische Aufladungen durch zu trockene Atmosphäre zu vermeiden.

Zudem leitet die Wärmetauschanordnung die Entspannungskälte in der Niederdruckleitung von der Niederdruckleitung weg, wobei die Regelanordnung, die Niederdruckleitung bzw. der Gasstrom in der Niederdruckleitung in vorteilhafter Weise erwärmt werden. Durch die Erwärmung der Regelanordnung, der Niederruckleitung bzw. des Gasstroms in der Niederdruckleitung kann eine Kondensation von etwaiger Feuchtigkeit in der Niederdruckleitung erschwerbar oder reduzierbar sein. Durch den geringeren Feuchtegehalt und die erhöhte Temperatur in der Niederdruckleitung bzw. in der Regelanordnung kann die Hydratbildung, beispielsweise eine Bildung von Methanhydrat im Gasstrom vermeidbar oder erschwerbar sein. Durch die reduzierte oder verhinderte Hydratbildung können ein Verstopfen der Niederdruckleitung oder der Regelanordnung und ein daraus resultierender Ausfall der Gasdruckregelanlage oder eine reduzierte Funktionsfähigkeit der Gasdruckregelanlage vermeidbar sein. Die Entfeuchtung des Belüftungsfluidstroms kann hierbei mit einfachen Mitteln kostengünstig umgesetzt werden. Zudem liegen die Kosten zum Betreiben der Wärmetauschanordnung unter den Kosten, welche entstehen würden, wenn die Temperatur des Gasstroms in der Niederruckleitung oder die Temperatur der Außenseite der Niederdruckleitung auf eine Temperatur erhöht werden, welche höher ist als eine Taupunkttemperatur des Belüftungsfluidstroms mit nicht reduziertem Feuchtegehalt. Durch die Wärmetauschanordnung kann beispielsweise auf eine Wärmvorrichtung verzichtet werden, welche die Niederdruckleitung oder die Regelanordnung oder den korrespondierenden Gasstrom erwärmt.

Nach einer günstigen Ausgestaltung der Erfindung kann die Wärmetauschanordnung einen Kopplungsbereich mit der Belüftungsvorrichtung und einen Kopplungsbereich mit der Niederdruckleitung umfassen, wobei das bei der Entfeuchtung entstehende Kondenswasser aus dem Strom des Belüftungsfluides auskondensiert. Dies kann günstigerweise nahe des Kopplungsbereichs der Wärmetauschanordnung mit der Belüftungsvorrichtung erfolgen. Hierbei kondensiert die Feuchtigkeit insbesondere im Kopplungsbereich der Wärmetauschanordnung mit der Belüftungsvorrichtung aus dem Belüftungsfluidstrom aus, wodurch ein klar definierter Kondensationsbereich entstehen kann.

Dadurch können in diesem Bereich Schutzmaßnahmen ergriffen werden, um diesen Bereich vor der auskondensierten Flüssigkeit, beispielsweise vor Kondenswasser, zu schützen und um die auskondensierte Flüssigkeit bzw. das Kondenswasser zu sammeln oder abzuleiten oder zu sammeln und abzuleiten. Eine Ansammlung von kondensierter Flüssigkeit im Raum insbesondere eine Ansammlung von kondensierter Flüssigkeit am Boden, welche durch auf den Boden des Raumes tropfende auskondensierte Flüssigkeit entstehen kann, kann hierbei vermieden werden. Dadurch können auch eine Beschädigung des Bodens oder eine Beschädigung von anderen Elementen im Raum sowie eine Schimmelbildung am Boden und/oder an den Wänden und/oder an anderen Bauteilen vermieden werden.

Der aus der Belüftungsvorrichtung ausströmende und in Richtung der Niederdruckleitung strömende Belüftungsfluidstrom kann durch die Entfeuchtung am Kopplungsbereich der Wärmetauschanordnung mit der Belüftungsvorrichtung einen konstanten Feuchtegehalt aufweisen. Optional kann der Feuchtegehalt auch geregelt und/oder gesteuert werden.

Nach einer günstigen Ausgestaltung der Erfindung kann die von dem Feuchtegehalt des Belüftungsfluides abhängige Taupunkttemperatur des aus der Belüftungsvorrichtung ausströmenden Belüftungsfluidstroms kleiner sein als eine Temperatur, unterhalb welcher ein Hydrat, insbesondere Methanhydrat, aus dem Gasstrom in der Niederdruckleitung ausfällt. Optional oder alternativ kann die Taupunkttemperatur des aus der Belüftungsvorrichtung ausströmenden Belüftungsfluides kleiner sein als die Außentemperatur der Niederdruckleitung. Der Gasstrom in der Niederdruckleitung weist insbesondere eine Temperatur auf, welche über der Temperatur liegt, unterhalb welcher ein Hydrat aus dem Gasstrom ausfällt. Weist der Belüftungsfluidstrom eine Taupunkttemperatur auf, welche kleiner als die Temperatur ist, unterhalb welcher ein Hydrat aus dem Gasstrom ausfällt, liegt die Temperatur der Außenseite der Niederdruckleitung oberhalb der Taupunkttemperatur des Belüftungsfluidstroms, so dass eine Kondensation von Flüssigkeit im Bereich der Niederdruckleitung erschwert ist. Weist der aus der Belüftungsvorrichtung ausströmende Belüftungsfluidstrom eine Taupunkttemperatur auf, welche kleiner als die Außentemperatur der Niederdruckleitung ist, kann ebenfalls die Kondensation von Flüssigkeit im Bereich der Niederdruckleitung erschwert sein.

Die Taupunktemperatur des aus der Belüftungsvorrichtung ausströmenden Belüftungsfluidstroms kann bei Bedarf beispielsweise durch Erwärmung des Belüftungsfluidstroms nach dem Entfeuchten oder durch Erwärmung der Innentemperatur des Raumes variiert werden.

Nach einer günstigen Ausgestaltung der Erfindung kann die Hochdruckleitung mit einer Vorwärmvorrichtung gekoppelt sein, welche vorgesehen ist, den Gasstrom in der Hochdruckleitung auf eine vorgegebene Vorheiztemperatur zu erwärmen, insbesondere wobei die Vorheiztemperatur von der Taupunkttemperatur des aus der Belüftungsvorrichtung ausströmenden Belüftungsfluidstroms und/oder von der Temperatur, unterhalb welcher das Hydrat in der Niederdruckleitung aus dem Gas ausfällt, abhängig ist.

Das bedeutet, dass die Vorwärmvorrichtung den Gasstrom in der Hochdruckleitung auf eine genügend hohe Vorheiztemperatur vorerwärmt, so dass nach erfolgter Druckreduzierung und der daraus resultierenden Abkühlung eine zur Vermeidung von unerwünschten Effekten ausreichend hohe Gastemperatur gewährleistet ist. Diese Gastemperatur liegt über der Taupunktemperatur des Belüftungsfluidstroms und über der Temperatur, unterhalb welcher das Hydrat in der Niederdruckleitung aus dem Gas ausfällt. Da die Taupunktemperatur des Belüftungsfluidstroms durch die Entfeuchtung reduziert ist, und die Entfeuchtung direkt von der aktuellen Temperatur im Kopplungsbereich der Wärmetauschanordnung mit der Niederdruckleitung abhängt, kann beim Erwärmen des Gasstroms in der Hochdruckleitung im Wesentlichen die Temperatur berücksichtigt werden, unterhalb welcher das Hydrat in der Niederdruckleitung aus dem Gas ausfällt. Da bei üblichen Gasdruckregelanlagen nicht entfeuchtete Belüftungsfluide zum Belüften des Raumes genutzt werden, liegt die Taupunkttemperatur der üblichen nicht entfeuchteten Belüftungsfluidströme oberhalb der Temperatur, unterhalb welcher das Hydrat in der Niederdruckleitung aus dem Gas ausfällt. Dadurch ist die Vorheiztemperatur bei diesen Gasdruckregelanlagen im Gegensatz zur Vorheiztemperatur der erfindungsgemäßen Gasdruckregelanlage erhöht. Die erfindungsgemäße Gasdruckregelanlage kann daher reduzierte Kosten für den Betrieb der Vorwärmvorrichtung aufweisen.

Nach einer günstigen Ausgestaltung der Erfindung kann die Wärmetauschanordnung den Kopplungsbereich zum Wärmetausch mit dem Belüftungsfluidstrom innerhalb einer den Belüftungsfluidstrom leitenden Leitung aufweisen. Optional oder alternativ kann die Wärmetauschanordnung den Kopplungsbereich zum Wärmetausch mit dem Belüftungsfluidstrom an einer Außenseite der den Belüftungsfluidstrom leitenden Leitung aufweisen. Bei einem Kopplungsbereich innerhalb der den Belüftungsfluidstrom leitenden Leitung kann, die Entspannungskälte in die Leitung eingeleitet und der Belüftungsfluidstrom direkt abgekühlt werden. Bei einem Kopplungsbereich an einer Außenseite der den Belüftungsfluidstrom leitenden Leitung kann der Belüftungsfluidstrom indirekt durch die von außen gekühlte Leitung abgekühlt werden. Der Belüftungsfluidstrom kühlt im Kopplungsbereich der Leitung ab, wodurch eine sichere Kondensation der Feuchtigkeit aus dem Belüftungsfluides erzielt werden kann.

Hierbei kann der Abschnitt der Leitung mit dem Kopplungsbereich innerhalb oder außerhalb des Raumes angeordnet sein, in welchem die korrespondierende Niederdruckleitung angeordnet ist. Das, die Entspannungskälte transportierende, Medium kann als Wärmeträgerfluid beziehungsweise als Kühlmittel ausgeführt sein. Ein Wärmeträgerfluid beziehungsweise ein Kühlmittel können Wasser, Salzlösungen, Öl oder Luft sein. Der Kopplungsbereich der Wärmetauschanordnung mit der Niederdruckleitung kann innerhalb der Niederdruckleitung und/oder außerhalb der Niederdruckleitung angeordnet sein.

Nach einer günstigen Ausgestaltung der Erfindung kann die Wärmetauschanordnung eine Pumpe umfassen, welche das die Entspannungskälte transportierende Medium antreibt. Optional oder alternativ kann die Wärmetauschanordnung ein Wärmerohr, auch als Heatpipe bekannt, umfassen.

Nach einer günstigen Ausgestaltung der Erfindung kann eine Kondensatsammel- und/oder Ableitanordnung für auskondensierte Flüssigkeit vorgesehen sein, welche aus dem Belüftungsfluidstrom auskondensierte Flüssigkeit insbesondere im Bereich der Belüftungsvorrichtung auffängt. Dadurch kann verhindert oder vermieden werden, dass die auskondensierte Flüssigkeit in andere Bereiche des Raums gelangt. Hierbei kann unter anderem eine Pfützenbildung am Boden des Raumes vermieden werden.

Die Kondensatsammel- und/oder Ableitanordnung kann auskondensierte Flüssigkeit auffangen und in einem geeigneten Behälter sammeln. Alternativ kann die Kondensatsammel- und/oder Ableitanordnung die Flüssigkeit sammeln und in ein Abwasserrohr leiten.

Nach einer günstigen Ausgestaltung der Erfindung kann mindestens eine Sensoranordnung zur Erfassung eines Feuchtegehalts in der Belüftungsvorrichtung in Strömungsrichtung nach dem Kopplungsbereich der Wärmetauschanordnung vorgesehen sein. Optional oder alternativ kann mindestens eine Sensoranordnung zur Erfassung eines Feuchtegehalts des Gasstroms in der Hochdruckleitung vorgesehen sein. Optional oder alternativ kann mindestens eine Sensoranordnung zur Erfassung eines Feuchtegehalts der Raumluft vorgesehen sein.

Durch die ermittelten Sensordaten der wenigstens einen Sensoranordnung, kann der jeweilige aktuelle Feuchtegehalt des aus der Belüftungsvorrichtung austretenden Belüftungsluftstroms und/oder des Gasstroms in der Hochdruckleitung oder der Feuchtegehalt der Raumluft ermittelt werden. Daraus lassen sich korrespondierende Taupunkttemperaturen oder die Temperatur, unterhalb welcher das Hydrat in der Niederdruckleitung aus dem Gas ausfällt, ermitteln.

Nach einer günstigen Ausgestaltung der Erfindung kann eine Auswerte- und Steuereinheit zur Anpassung einer aktuellen Vorheiztemperatur vorgesehen sein, wobei die Auswerte- und Steuereinheit mit der wenigstens einen Sensoranordnung zur Erfassung des Feuchtegehalts gekoppelt ist und aus dem aktuell erfassten jeweiligen Feuchtegehalt des Gasstroms in der Hochdruckleitung und/oder des, aus der Belüftungsvorrichtung austretenden, Belüftungsfluidstroms die korrespondierende Taupunkttemperatur des Gasstroms und/oder des Belüftungsluftstroms ermittelt. Optional oder alternativ kann die Auswerte- und Steuereinheit die Temperatur ermitteln, unterhalb welcher das Hydrat in der Niederdruckleitung aus dem Gas ausfällt. Hierbei kann die Auswerte- und Steuereinheit mit weiteren Sensoren beispielsweise zur Temperaturerfassung gekoppelt sein. In Abhängigkeit der ermittelten aktuellen Taupunkttemperaturen oder der aktuell ermittelten Temperatur, unterhalb welcher das Hydrat in der Niederdruckleitung ausfällt, kann die Auswerte- und Steuereinheit korrespondierende Signale an die Vorwärmvorrichtung ausgeben.

Zudem kann die Auswerte- und Steuereinheit mit weiteren Heizelementen gekoppelt sein, welche beispielsweise die Temperatur im Raum und/oder die Temperatur des aus der Belüftungsvorrichtung austretenden Belüftungsfluides beeinflussen.

Nach einer günstigen Ausgestaltung der Erfindung kann wenigstens ein Heizelement zur Erwärmung des entfeuchteten Belüftungsfluides vorgesehen sein. Das Heizelement kann beispielsweise mit einem Auslassbereich der Belüftungsvorrichtung gekoppelt sein. Durch die Erwärmung des austretenden Belüftungsfluidstroms kann die relative Luftfeuchtigkeit des Belüftungsfluidstroms und die relative Luftfeuchtigkeit der Raumluft abgesenkt werden, welche durch den Belüftungsfluidstrom ebenfalls erwärmbar sein kann. Optional oder alternativ kann ein Heizelement im Raum angeordnet werden, welches die Luft im Raum erwärmt. Durch die Erwärmung der Raumluft kann ebenfalls der austretende Belüftungsfluidstrom erwärmt und so die relative Luftfeuchtigkeit abgesenkt werden.

Nach einem weiteren Aspekt der Erfindung wird eine Entfeuchtungseinrichtung für eine Gasdruckregelanlage vorgeschlagen, mit einer Belüftungsvorrichtung zur Zufuhr eines Belüftungsfluides, insbesondere Umgebungsluft, sowie einer Hochdruckleitung, einer Niederdruckleitung und einer strömungsmäßig zwischen der Hochdruckleitung und der Niederdruckleitung angeordneten Regelanordnung, wobei ein Gasstrom bestimmungsgemäß von der Hochdruckleitung in die Niederdruckleitung strömt und ein Gasdruck des Gasstroms in der Hochdruckleitung größer ist als ein Gasdruck des Gasstroms in der Niederdruckleitung, wobei beim Übergang des Gasstroms von der Hochdruckleitung in die Niederdruckleitung eine Entspannungskälte entsteht, wobei die Belüftungsvorrichtung und die Niederdruckleitung mit einer Wärmetauschanordnung so gekoppelt sind, dass die Entspannungskälte eine Verminderung des Feuchtegehalts des Belüftungsfluides im Bereich der Belüftungsvorrichtung bewirkt.

In vorteilhafter Weise kühlt die Entspannungskälte den Belüftungsfluidstrom ab. Dadurch kann das Belüftungsfluid bereits in der Belüftungsvorrichtung im Wesentlichen auf eine Temperatur abkühlbar sein, welche ungefähr im Bereich der Niederdruckleitung und im Bereich der Regelanordnung herrscht.

Hierbei kondensiert die Feuchtigkeit bereits in der Belüftungsvorrichtung aus dem Belüftungsfluid aus. Dadurch ist nach dem Ausströmen des Belüftungsfluidstroms aus der Belüftungsvorrichtung ein geringerer Feuchtegehalt im Belüftungsfluidstrom vorhanden, welcher an der Niederdruckleitung, an der Regelanordnung und in anderen Bereichen des Raumes kondensieren kann. Die Bildung von Kondenswasser und/oder Raureif und/oder Eis an einer Außenseite der Niederdruckleitung und/oder an einer Außenseite der Regelanordnung oder an beweglichen Elementen der Regelanordnung wird durch den reduzierten Feuchtegehalt im Belüftungsfluidstrom und durch die reduzierte Luftfeuchtigkeit im Raum erschwert oder vermieden.

Der verbleibende Feuchtegehalt, des aus der Belüftungsvorrichtung ausströmenden Belüftungsfluidstroms, ist von der zugeführten Entspannungskälte und von der Umgebungstemperatur abhängig. Hierbei kann der Wert des verbleibenden Feuchtegehalts abschätzbar oder vorgebbar sein, so dass die in den Raum eingebrachte Feuchtigkeit und die daraus resultierende Luftfeuchtigkeit im Raum ebenfalls abschätzbar oder vorgebbar sein können. Da der in den Raum eintretende Belüftungsfluidstrom einen geringeren Feuchtegehalt aufweist, herrscht auch im Raum eine geringere Luftfeuchtigkeit als ohne Entfeuchtung des Belüftungsfluidstroms. Die erzielte Luftfeuchtigkeit im Raum kann beispielsweise im Bereich von 30% bis 50% liegen.

In vorteilhafter Weise, erfolgt die Entfeuchtung des Belüftungsfluidstroms im Wesentlichen automatisch in Abhängigkeit der auf den Belüftungsfluidstrom übertragenen Entspannungskälte. Es ist kein Austauschen von Elementen, wie bei Entfeuchtern auf Basis von Granulat, erforderlich, wodurch ein zuverlässiges Entfeuchten des Belüftungsfluidstroms während einer längeren Laufzeit der Entfeuchtungseinrichtung und der Gasdruckregelanlage umsetzbar ist. Zudem kann das Entfeuchten des Belüftungsfluidstroms beendet werden, wenn die Gasdruckregelanlage nicht im Betrieb ist. Des Weiteren kann auf Kompressoren und andere aufwändige Bauteile einer üblichen Entfeuchtungseinrichtung, zum Kühlen des Belüftungsfluidstroms, verzichtet werden.

Nach einer günstigen Ausgestaltung der Entfeuchtungseinrichtung kann die Wärmetauschanordnung einen Kopplungsbereich mit der Belüftungsvorrichtung und einen Kopplungsbereich mit der Niederdruckleitung umfassen, wobei das bei der Entfeuchtung entstehende Kondenswasser aus dem Strom des Belüftungsfluides nahe des Kopplungsbereichs der Wärmetauschanordnung mit der Belüftungsvorrichtung auskondensiert. Dies kann günstiger Weise nahe des Kopplungsbereichs der Wärmetauschanordnung mit der Belüftungsvorrichtung erfolgen. Hierbei kondensiert die Feuchtigkeit insbesondere im Kopplungsbereich der Wärmetauschanordnung mit der Belüftungsvorrichtung aus dem Belüftungsfluidstrom aus, wodurch ein klar definierter Kondensationsbereich entstehen kann. Dadurch können in diesem Bereich Schutzmaßnahmen ergriffen werden, um diesen Bereich vor der auskondensierten Flüssigkeit, beispielsweise vor Kondenswasser, zu schützen und um die auskondensierte Flüssigkeit bzw. das Kondenswasser zu sammeln oder abzuleiten oder zu sammeln und abzuleiten.

Eine Ansammlung von kondensierter Flüssigkeit im Raum insbesondere eine Ansammlung von kondensierter Flüssigkeit am Boden, welche durch auf den Boden des Raumes tropfende auskondensierte Flüssigkeit entstehen kann, kann hierbei vermieden werden. Dadurch können auch eine Beschädigung des Bodens oder eine Beschädigung von anderen Elementen im Raum sowie eine Schimmelbildung am Boden und/oder an den Wänden und/oder an anderen Bauteilen vermieden werden. Der aus der Belüftungsvorrichtung ausströmende und in Richtung der Niederdruckleitung strömende Belüftungsfluidstrom kann durch die Entfeuchtung am Kopplungsbereich der Wärmetauschanordnung mit der Belüftungsvorrichtung einen konstanten Feuchtegehalt aufweisen. Optional kann der Feuchtegehalt auch geregelt und/oder gesteuert werden.

Nach einer günstigen Ausgestaltung der Entfeuchtungseinrichtung kann die Wärmetauschanordnung den Kopplungsbereich zum Wärmetausch mit dem Belüftungsfluidstrom innerhalb einer den Belüftungsfluidstrom leitenden Leitung aufweisen und/oder die Wärmetauschanordnung den Kopplungsbereich mit der Niederdruckleitung innerhalb der Niederdruckleitung aufweisen. Bei einem Kopplungsbereich innerhalb der den Belüftungsfluidstrom leitenden Leitung kann, die Entspannungskälte in die den Belüftungsfluidstrom leitenden Leitung eingeleitet und der Belüftungsfluidstrom direkt abgekühlt werden.

Der Belüftungsfluidstrom kühlt im Kopplungsbereich der Leitung ab, wodurch eine sichere Kondensation der Feuchtigkeit aus dem Belüftungsfluid erzielt werden kann. Hierbei kann der Abschnitt der Leitung mit dem Kopplungsbereich innerhalb oder außerhalb des Raumes angeordnet sein, in welchem die korrespondierende Niederdruckleitung angeordnet ist. Das, die Entspannungskälte transportierende, Medium kann als Wärmeträgerfluid beziehungsweise als Kühlmittel ausgeführt sein. Ein Wärmeträgerfluid beziehungsweise ein Kühlmittel können Wasser, Salzlösungen, Öl oder Luft sein. Ist der Kopplungsbereich der Wärmetauschanordnung mit der Niederdruckleitung innerhalb der Niederdruckleitung angeordnet, kann das, die Entspannungskälte transportierende, Medium direkt durch die Entspannungskälte abgekühlt werden. Nach einer günstigen Ausgestaltung der Entfeuchtungseinrichtung kann die Wärmetauschanordnung den Kopplungsbereich zum Wärmetausch mit dem Belüftungsfluidstrom an einer Außenseite der den Belüftungsfluidstrom leitenden Leitung aufweisen, und/oder die Wärmetauschanordnung kann den Kopplungsbereich mit der Niederdruckleitung an einer Außenseite der Niederdruckleitung aufweisen. Bei einem an einer Außenseite der den Belüftungsfluidstrom leitenden Leitung kann der Belüftungsfluidstrom indirekt durch die von außen gekühlte Leitung abgekühlt werden. Der Belüftungsfluidstrom kühlt im Kopplungsbereich der Leitung ab, wodurch eine sichere Kondensation der Feuchtigkeit aus dem Belüftungsfluides erzielt werden kann. Hierbei kann der Abschnitt der Leitung mit dem Kopplungsbereich innerhalb oder außerhalb des Raumes angeordnet sein, in welchem die korrespondierende Niederdruckleitung angeordnet ist. Bei einem Kopplungsbereich an einer Außenseite der Niederdruckleitung kann das, die Entspannungskälte transportierende, Medium indirekt durch die abgekühlte Niederdruckleitung abgekühlt werden.

Nach einer günstigen Ausgestaltung der Entfeuchtungseinrichtung kann die Wärmetauschanordnung eine Pumpe umfassen, welche ein die Entspannungskälte transportierendes Medium antreibt. Die Pumpe kann eine Umwälzung des die Entspannungskälte transportierenden Mediums bewirken, wobei Parameter, wie beispielsweise die umgewälzte Menge des Mediums pro Zeiteinheit, vorgebbar und/oder variierbar sind.

Nach einer günstigen Ausgestaltung der Entfeuchtungseinrichtung kann die Wärmetauschanordnung ein Wärmerohr umfassen.

Die weitere Aufgabe wird gelöst von einem Verfahren zum Betreiben einer Gasdruckregelanlage, welches ein Belüftungsfluid in einer Belüftungsvorrichtung durch die Entspannungskälte des Gases in einer Niederdruckleitung entfeuchtet. Unter einem Verfahren zum Betreiben einer Gasdruckregelanlage wird im Folgenden ein Verfahren verstanden, in welchem ein Gasstrom von einer Hochdruckleitung über eine Regelanordnung in die Niederdruckleitung geleitet wird, wobei der Gasdruck des Gasstroms zwischen der Hochdruckleitung und Niederdruckleitung reduziert wird, wobei beim Übergang des Gasstroms von der Hochdruckleitung in die Niederdruckleitung die Entspannungskälte entsteht. Zusätzlich wird bei dem erfindungsgemäßen Verfahren zum Betreiben einer Gasdruckregelanlage ein Raum, in welchem die Hochdruckleitung und die Niederdruckleitung und die Regelanordnung angeordnet sind, durch den aus der Belüftungsvorrichtung austretenden Belüftungsfluidstrom belüftet. Insbesondere kann das Belüftungsfluid im Bereich der Belüftungsvorrichtung entfeuchtet werden.

In vorteilhafter Weise kühlt die Entspannungskälte den Belüftungsfluidstrom ab. Dadurch kann das Belüftungsfluid bereits in der Belüftungsvorrichtung im Wesentlichen auf eine Temperatur abgekühlt werden, welche ungefähr im Bereich der Niederdruckleitung und im Bereich der Regelanordnung herrscht. Hierbei kondensiert die Feuchtigkeit bereits in der Belüftungsvorrichtung aus dem Belüftungsfluid aus. Dadurch ist nach dem Ausströmen des Belüftungsfluidstroms aus der Belüftungsvorrichtung ein geringerer Feuchtegehalt im Belüftungsfluidstrom vorhanden, welcher an der Niederdruckleitung, an der Regelanordnung und in anderen Bereichen des Raumes kondensieren kann. Dadurch kann auf eine zusätzliche Beheizung der Regelanordnung oder der Niederdruckleitung auf eine Temperatur oberhalb einer Taupunkttemperatur des Belüftungsfluidstroms verzichtet werden. Die Bildung von Kondenswasser und/oder Raureif und/oder Eis an einer Außenseite der Niederdruckleitung und/oder an einer Außenseite der Regelanordnung oder an beweglichen Elementen der Regelanordnung wird durch den reduzierten Feuchtegehalt im Belüftungsfluidstrom und durch die reduzierte Luftfeuchtigkeit im Raum erschwert oder vermieden.

Durch die reduzierte Kondenswasserbildung an der Außenseite der Regelanordnung und/oder an der Außenseite der Niederdruckleitung können eine Korrosion und andere aus Nässe resultierende Schäden der jeweiligen Außenseite vermieden oder zumindest erschwert werden. Dadurch können funktionsbeeinträchtigende Beschädigungen vermieden und eine Funktionsdauer der Niederdruckleitung und/oder eine Funktionsdauer der Regelanordnung verlängert werden. Der verbleibende Feuchtegehalt des aus der Belüftungsvorrichtung ausströmenden Belüftungsfluidstroms ist von der zugeführten Entspannungskälte und von der Umgebungstemperatur abhängig. Hierbei kann der Wert des verbleibenden Feuchtegehalts abgeschätzt oder vorgegeben werden, so dass die in den Raum eingebrachte Feuchtigkeit und die daraus resultierende Luftfeuchtigkeit im Raum ebenfalls abgeschätzt oder vorgegeben werden können. Da der in den Raum eintretende Belüftungsfluidstrom einen geringeren Feuchtegehalt aufweist, herrscht auch im Raum eine geringere Luftfeuchtigkeit als ohne Entfeuchtung des Belüftungsfluidstroms. Die erzielte Luftfeuchtigkeit im Raum kann beispielsweise im Bereich von 30% bis 50% liegen.

Zudem wird die Entspannungskälte in der Niederdruckleitung nach außen geleitet, wobei die Regelanordnung, die Niederdruckleitung bzw. der Gasstrom in der Niederdruckleitung in vorteilhafter Weise erwärmt werden. Durch die Erwärmung der Regelanordnung, der Niederdruckleitung bzw. des Gasstroms in der Niederdruckleitung kann eine Kondensation von Feuchtigkeit in der Niederdruckleitung erschwert oder reduziert werden. Durch einen geringeren Feuchtegehalt und die erhöhte Temperatur in der Niederdruckleitung bzw. in der Regelanordnung kann die Hydratbildung, beispielsweise eine Bildung von Methanhydrat im Gasstrom vermieden oder erschwert werden.

Durch die reduzierte oder verhinderte Hydratbildung kann ein Verstopfen der Niederdruckleitung und/oder der Regelanordnung und ein daraus resultierender Ausfall der Gasdruckregelanlage oder einer reduzierte Funktionsfähigkeit der Gasdruckregelanlage vermieden werden.

Die Kosten zum Entfeuchten des Belüftungsfluides in der Belüftungsvorrichtung durch die Entspannungskälte in der Niederdruckleitung, können unter den Kosten liegen, welche entstehen würden, wenn die Temperatur des Gasstroms in der Niederruckleitung oder die Temperatur der Außenseite der Niederdruckleitung auf eine Temperatur erhöht werden, welche höher ist als eine Taupunkttemperatur des Belüftungsfluidstroms mit nicht reduziertem Feuchtegehalt.

Nach einer günstigen Ausgestaltung der Erfindung kann das Gas in der Hochdruckleitung auf eine vorgegebene Vorheiztemperatur erwärmt werden. Die Vorheiztemperatur ist insbesondere abhängig von der Taupunkttemperatur des aus der Belüftungsvorrichtung ausströmenden Belüftungsfluidstroms und/oder von der Temperatur, unterhalb welcher das Hydrat in der Niederdruckleitung aus dem Gas ausfällt. Die Taupunkttemperatur und die Temperatur, unterhalb welcher das Hydrat in der Niederdruckleitung aus dem Gas ausfällt, können aus einer aktuellen Temperatur und eines aktuellen Feuchtegehalts des Gases in der Hochdruckleitung bzw. aus einer aktuellen Temperatur und einem aktuellen Feuchtegehalt des aus der Belüftungsvorrichtung austretenden Belüftungsfluidstroms ermittelt werden. Der Gasstrom in der Hochdruckleitung wird auf eine genügend hohe Vorheiztemperatur vorerwärmt, so dass nach erfolgter Druckreduzierung und der daraus resultierenden Abkühlung eine zur Vermeidung von unerwünschten Effekten ausreichend hohe Gastemperatur gewährleistet wird. Diese Gastemperatur liegt über der Taupunktemperatur des Belüftungsfluidstroms und über der Temperatur, unterhalb welcher das Hydrat in der Niederdruckleitung aus dem Gas ausfällt. Hierbei kann die Vorheiztemperatur verändert werden, wenn sich die Taupunkttemperatur oder die Temperatur, unterhalb welcher das Hydrat in der Niederdruckleitung aus dem Gas ausfällt, durch veränderte Parameter ändern.

Da die Taupunktemperatur des Belüftungsfluidstroms durch die Entfeuchtung reduziert ist, und die Entfeuchtung direkt von der aktuellen Temperatur im Kopplungsbereich der Wärmetauschanordnung mit der Niederdruckleitung abhängt, kann beim Erwärmen des Gasstroms in der Hochdruckleitung im Wesentlichen die Temperatur berücksichtigt werden, unterhalb welcher das Hydrat in der Niederdruckleitung aus dem Gas ausfällt.

Da bei üblichen Gasdruckregelanlagen und Verfahren zum Betreiben der korrespondierenden Gasdruckregelanlagen nicht entfeuchtete Belüftungsfluide zum Belüften des Raumes genutzt werden, liegt die Taupunkttemperatur der üblichen nicht entfeuchteten Belüftungsfluidströme oberhalb der Temperatur, unterhalb welcher das Hydrat in der Niederdruckleitung aus dem Gas ausfällt. Dadurch ist die Vorheiztemperatur bei diesen Verfahren im Gegensatz zur Vorheiztemperatur des erfindungsgemäßen Verfahrens erhöht. Das erfindungsgemäße Verfahren kann daher reduzierte Kosten für den Betrieb einer Vorwärmvorrichtung aufweisen.

Nach einer günstigen Ausgestaltung der Erfindung kann Entspannungskälte in eine den Belüftungsfluidstrom leitende Leitung eingeleitet und/oder außen an der Leitung entlang geleitet werden. Bei einer Einleitung der Entspannungskälte in die, den Belüftungsfluidstrom leitende, Leitung kann der Belüftungsfluidstrom direkt abgekühlt werden. Wird die Entspannungskälte an einer Außenseite der, den Belüftungsfluidstrom leitenden, Leitung entlang geleitet, kann der Belüftungsfluidstrom indirekt durch die von außen gekühlte Leitung abgekühlt werden. Der Belüftungsfluidstrom kühlt in dem Bereich in dem die Entspannungskälte wirkt in der Leitung ab, wodurch eine sichere Kondensation der Feuchtigkeit aus dem Belüftungsfluides erzielt werden kann.

Nach einer günstigen Ausgestaltung der Erfindung kann die auskondensierte Flüssigkeit insbesondere im Bereich der Belüftungsvorrichtung aufgefangen und/oder gesammelt und/oder weggeleitet werden. Die auskondensierte Flüssigkeit kann innerhalb oder außerhalb der Belüftungsvorrichtung aufgefangen und gesammelt oder in eine Abwasserleitung geleitet werden. Dadurch kann ein unkontrolliertes Ansammeln von Flüssigkeiten vermieden oder erschwert werden.

Nach einer günstigen Ausgestaltung der Erfindung kann ein Feuchtegehalt des aus der Belüftungsvorrichtung ausströmenden Belüftungsfluidstroms und/oder ein Feuchtegehalt des Gasstroms in der Hochdruckleitung ermittelt und daraus die jeweilige korrespondierende Taupunkttemperatur abgeschätzt werden. Durch das Ermitteln des Feuchtegehalts kann die Entfeuchtung des Belüftungsfluidstroms überprüft werden. Zudem können die erfassten und ermittelten Parameter zur Weiterverarbeitung genutzt werden.

Nach einer günstigen Ausgestaltung der Erfindung kann die aktuelle Vorheiztemperatur an die aktuell abgeschätzte Taupunkttemperatur des Belüftungsfluidstroms und/oder an die Taupunkttemperatur des Gasstroms anpasst werden. In die Anpassung der Vorheiztemperatur können weitere Parameter, wie eine aktuelle Raumtemperatur oder eine aktuelle Temperatur des Belüftungsfluidstroms oder ein aktueller Druck in der Niederdruckleitung oder in der Hochdruckleitung oder im Raum mit einfließen. Durch die Anpassung der Vorheiztemperatur kann energieeffizient ein Ausfallen des Hydrats aus dem Gas in der Niederdruckleitung oder eine Kondensation von Flüssigkeit in der Niederdruckleitung oder außen an der Niederdruckleitung vermieden oder erschwert werden. Hierbei kann die Vorheiztemperatur insbesondere so angepasst werden, dass bei möglichst geringem Energieverbrauch das Ausfallen des Hydrats und/oder das Auskondensieren von Flüssigkeit vermieden werden kann.

Die erfindungsgemäße Gasdruckregelanlage und die erfindungsgemäße Entfeuchtungseinrichtung für eine Gasdruckregelanlage zeichnen sich durch ihre Einfachheit, durch Abwesenheit beweglicher Teile und im Wesentlichen durch Verzicht auf äußere Energiequellen aus. Die erfindungsgemäße Gasdruckregelanlage und die erfindungsgemäße Entfeuchtungseinrichtung für eine Gasdruckregelanlage sowie das erfindungsgemäße Verfahren zeichnen sich durch Kosteneinsparungen in der Anschaffung und im Betrieb sowie durch die Erreichung eines sicherheitstechnisch hohen Niveaus aus.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: eine schematische Darstellung eines ersten Ausführungsbeispiels der erfindungsgemäßen Gasdruckregelanlage sowie eine schematische Darstellung eines ersten Ausführungsbeispiels der erfindungsgemäßen Entfeuchtungseinrichtung; und
- Fig. 2: eine schematische Darstellung eines zweiten Ausführungsbeispiels der erfindungsgemäßen Gasdruckregelanlage sowie eine schematische Darstellung eines zweiten Ausführungsbeispiels der erfindungsgemäßen Entfeuchtungseinrichtung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen. Die dargestellten Komponenten und Elemente, deren Auslegung und Verwendung können im Sinne der Überlegungen eines Fachmanns variieren und an die jeweiligen Anwendungen angepasst werden.

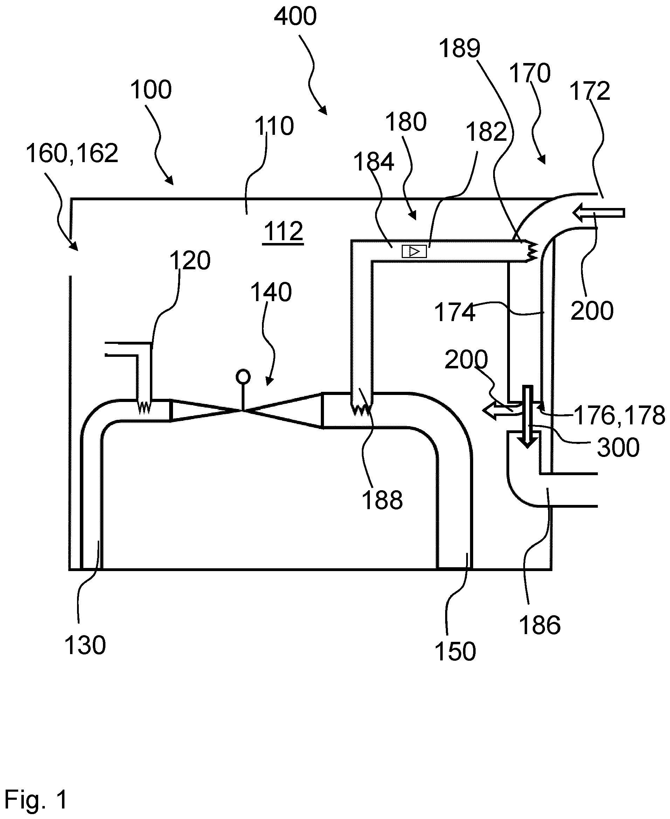

Figur 1 zeigt schematisch ein eine Gasdruckregelanlage 100 nach einem ersten Ausführungsbeispiel der Erfindung sowie eine schematische Darstellung eines ersten Ausführungsbeispiels der erfindungsgemäßen Entfeuchtungseinrichtung 400.

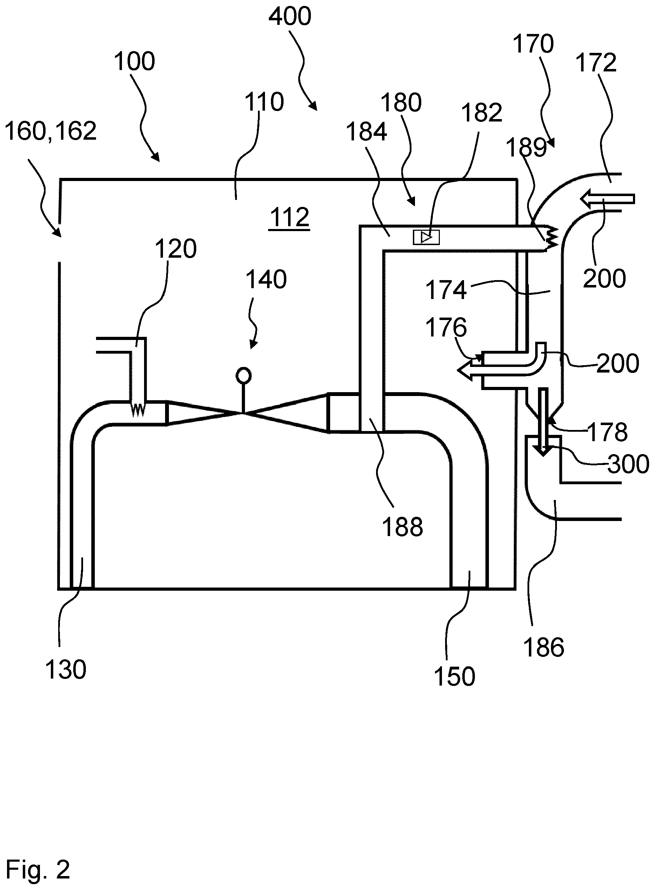

Figur 2 zeigt schematisch ein eine Gasdruckregelanlage 100 nach einem zweiten Ausführungsbeispiel der Erfindung sowie eine schematische Darstellung eines zweiten Ausführungsbeispiels der erfindungsgemäßen Entfeuchtungseinrichtung 400.

Im Folgenden wird zunächst auf die Gemeinsamkeiten der dargestellten Ausführungsbeispiele erfindungsgemäßen Gasdruckregelanlage 100 sowie Ausführungsbeispiele der erfindungsgemäßen Entfeuchtungseinrichtung 400 eingegangen. Im weiteren Verlauf wird auf die Unterschiede zwischen den dargestellten Ausführungsbeispielen der erfindungsgemäßen Gasdruckregelanlage 100 sowie der Ausführungsbeispiele der erfindungsgemäßen Entfeuchtungseinrichtung 400 eingegangen.

Wie aus Figur 1 und 2 ersichtlich ist, umfasst die dargestellte Gasdruckregelanlage 100 in den beiden Ausführungsbeispielen eine Belüftungsvorrichtung 170 zur Zufuhr eines Belüftungsfluides 200. Zudem umfasst die dargestellte Gasdruckregelanlage 100 eine Hochdruckleitung 130, eine Niederdruckleitung 150 und eine strömungsmäßig zwischen der Hochdruckleitung 130 und der Niederdruckleitung 150 angeordnete Regelanordnung 140. Ein Gasstrom strömt von der Hochdruckleitung 130 in die Niederdruckleitung 150, wobei ein Gasdruck des Gasstroms in der Hochdruckleitung 130 größer ist als ein Gasdruck des Gasstroms in der Niederdruckleitung 150. Beim Reduzieren des Gasdrucks in der Regelanordnung 140 entsteht eine Entspannungskälte.

Die dargestellte Gasdruckregelanlage 100 kann als sogenannte GDRM (Gasdruckregelanlage und Gasdruckmessanlage) ausgeführt sein. Hierbei kann die Gasdruckregelanlage 100 das Gas mit einem Lager- oder Transportdruck zwischen 40 und 70 bar auf einen Druck zur Nutzung und Weiterverarbeitung zwischen 20 und 25 bar entspannen. Es ist auch eine Entspannung des Gases auf einen Druck von 13 bar vorstellbar. Die aus der Druckreduzierung resultierende Abkühlung des Gases ist proportional zur Druckdifferenz.

Wie aus Figur 1 und 2 weiter ersichtlich ist, umfasst die dargestellte Entfeuchtungseinrichtung 400 für eine Gasdruckregelanlage 100 in den beiden Ausführungsbeispielen eine Belüftungsvorrichtung 170 zur Zufuhr eines Belüftungsfluides 200, insbesondere Umgebungsluft, sowie eine Hochdruckleitung 130, eine Niederdruckleitung 150 und eine strömungsmäßig zwischen der Hochdruckleitung 130 und der Niederdruckleitung 150 angeordnete Regelanordnung 140, wobei ein Gasstrom bestimmungsgemäß von der Hochdruckleitung 130 in die Niederdruckleitung 150 strömt und ein Gasdruck des Gasstroms in der Hochdruckleitung 130 größer ist als ein Gasdruck des Gasstroms in der Niederdruckleitung 150, wobei beim Übergang des Gasstroms von der Hochdruckleitung 130 in die Niederdruckleitung 150 eine Entspannungskälte entsteht.

Erfindungsgemäß sind die Belüftungsvorrichtung 170 und die Niederdruckleitung 150 mit einer Wärmetauschanordnung 180 so gekoppelt, dass die Entspannungskälte eine Entfeuchtung des Belüftungsfluides 200 im Bereich der Belüftungsvorrichtung 170 bewirkt.

Wie aus Figur 1 und 2 weiter ersichtlich ist, sind ein Endabschnitt der Hochdruckleitung 130, und ein Endabschnitt der Niederdruckleitung 150 und die Regelanordnung 140 in einem Innenbereich 112 eines Raumes 110 beispielsweise in einer Regelstation angeordnet. Der Raum 110 weist Wände mit wenigstens zwei Öffnungen auf. Wenigstens eine der Öffnungen entspricht einer Belüftungsöffnung, welche zur Belüftung mit dem Belüftungsfluidstrom 200 genutzt wird und wenigstens eine weitere Öffnung entspricht einer Entlüftungsöffnung, zur Ausleitung von Gasansammlungen und abgestandener Raumluft. Die Wände können auch weitere Öffnungen beispielsweise eine Tür oder ein Fenster aufweisen.

Wie aus Figur 1 und 2 weiter ersichtlich ist, kühlt die Wärmetauschanordnung 180 den Belüftungsfluidstrom 200 mit der Entspannungskälte ab und erwärmt den Gasstrom in der Niederdruckleitung 150 und in der Regelanordnung 140. Durch das Abkühlen des Belüftungsfluidstroms 200 kondensiert ein Teil der Feuchtigkeit aus dem Belüftungsfluidstrom 200 aus. Beispielsweise können 50% bis 70% der Feuchtigkeit auf diese Weise aus dem Belüftungsfluidstrom 200 entfernt werden. Dadurch weist der in den Innenbereich 112 einströmende Belüftungsfluidstrom 200 einen Feuchtegehalt zwischen 30% und 50% auf, wodurch die Luftfeuchtigkeit im korrespondierenden Innenbereich 112 stark reduzierbar ist. Durch das Entfeuchten des Belüftungsfluidstroms 200 kann ein möglichst gleichbleibender Feuchtegehalt im Belüftungsfluidstrom 200 und dadurch eine möglichst gleichbleibende Feuchtigkeit in der Luft des Innenbereichs 112 geschaffen werden. Zudem kann durch den reduzierten Feuchtegehalt im Innenbereich 112 weniger Feuchtigkeit an Wänden, oder Elementen der erfindungsgemäßen Gasdruckregelanlage 100 kondensieren. Vorzugsweise wird der reduzierte Feuchtegehalt im Innenbereich 112 jedoch so hoch gewählt, dass statische Aufladungen im Innenbereich der Gasdruckregelanlage 100 vermieden werden können.

Das in den dargestellten Ausführungsbeispielen regulierte Gas entspricht Erdgas, welches häufig über Rohrleitungen zu einen oder mehreren Abnehmern transportiert wird. Erdgas besteht üblicherweise zu 95 vol.% aus Methan, enthält jedoch auch höher siedende Anteile von anderen Kohlenwasserstoffen. Je nach Herkunft kann die Qualität des Gases hinsichtlich Feuchtegehalt, Gaszusammensetzung und dergleichen stark schwanken. Die erfindungsgemäße Gasdruckregelanlage 100 ist aber auch für andere Gase bzw. Gasmischungen geeignet.

Wie aus Figur 1 und 2 weiter ersichtlich ist, umfasst eine Entlüftungsvorrichtung 160 in den dargestellten Ausführungsbeispielen der erfindungsgemäßen Gasdruckregelanlage 100 die Entlüftungsöffnung des Raumes 110 als Auslass 162 und ein Schlitzblech als Abdeckung für den Auslass 162. Die Entlüftungsvorrichtung 160 kann in einem alternativen Ausführungsbeispiel der erfindungsgemäßen Gasdruckregelanlage 100 auch mehr als einen Auslass 162 aufweisen. Es sind zudem auch andere Abdeckungen vorstellbar. Da Erdgas leichter als Raumluft ist, ist der Auslass 162 im dargestellten Ausführungsbeispiel der Entlüftungsvorrichtung 160 in deckennähe angeordnet, um Gasansammlungen aus dem Innenbereich 112 des Raumes 110 leiten zu können. Wird ein Gasdruck eines anderen Gases reguliert, welches schwerer als Luft ist, kann der Auslass 162 auch in Bodennähe angeordnet werden, um Gasansammlungen aus dem Innenbereich 112 des Raumes 110 leiten zu können.

Durch das Ausleiten des Gases aus dem Raum 110 kann die Bildung einer gefährlichen explosionsfähigen Atmosphäre und eine Bildung einer explosionsfähigen Atmosphäre vermieden oder erschwert werden. Unter einer gefährlichen explosionsfähigen Atmosphäre wird eine Atmosphäre verstanden, welche 50% der Explosionsgrenze erreicht hat. Unter einer explosionsfähigen Atmosphäre wird eine Atmosphäre verstanden, welche 100% der Explosionsgrenze erreicht hat. Eine explosionsfähige Atmosphäre ist zündfähig.

Wie aus Figur 1 und 2 weiter ersichtlich ist, umfasst die dargestellte Belüftungsvorrichtung 170 in den dargestellten Ausführungsbeispielen der erfindungsgemäßen Gasdruckregelanlage 100 und in den dargestellten Ausführungsbeispielen der erfindungsgemäßen Entfeuchtungseinrichtung 400 eine Leitung 174, welche beispielsweise als Rohr ausgeführt ist. Die Leitung 174 umfasst einen außerhalb des Raums 110 angeordneten Einlass 172, über welchen Umgebungsluft als Belüftungsfluid 200 eintritt, und einen im Innenbereich 112 des Raumes 110 angeordneten Auslass 176, über welchen das Belüftungsfluid 200 aus der Belüftungsvorrichtung 170 austritt. Der Auslass 176 der Belüftungsvorrichtung 170 ist mit der Belüftungsöffnung in der Wand zur Belüftung des Innenbereichs 112 gekoppelt. Im dargestellten Ausführungsbeispiel der Belüftungsvorrichtung 170 ist die Belüftungsöffnung in Bodennähe angeordnet. Die Belüftungsvorrichtung 170 kann in Kombination mit der Entlüftungsvorrichtung 160 eine sogenannte Querlüftung erzeugen, welche infolge eines Differenzdruckes entsteht, welcher durch Winddruck auf die Außenflächen der Wand erzeugt wird. Zudem kann die Querlüftung dadurch entstehen, dass ein kaltes Belüftungsfluid 200 nach unten absinkt und weiteres Belüftungsfluid 200 nach zieht. Es sind auch andere Belüftungsfluide 200 und korrespondierende Quellen für diese Belüftungsfluide 200, zum Belüften des Innenbereichs 112, anstelle von Umgebungsluft vorstellbar.

In einem alternativen Ausführungsbeispiel der Belüftungsvorrichtung 170 kann eine nicht dargestellte Pumpe den Belüftungsfluidstrom 200 vom Einlass 172 zum Auslass 176 der Leitung 174 erzeugen bzw. verstärken. Die Größenordnung des Belüftungsfluidstroms 200 liegt im dargestellten Ausführungsbeispiel der Belüftungsvorrichtung 170 bei 100 m³/h. Der Belüftungsfluidstrom 200 kann auch an aktuelle Parameter der Wärmetauschanordnung 180 angepasst werden. Hierbei kann der Belüftungsfluidstrom 200 beispielsweise erhöht werden, wenn das Kühlmittel der Wärmetauschanordnung 180 den Gefrierpunkt erreicht. Durch das Erhöhen des Belüftungsfluidstroms 200 kann ein Einfrieren des Kühlmittels in der Wärmetauschanordnung 180 vermieden werden. Das Kühlmittel kann Wasser oder einer Salzlösung entsprechen. Es sind auch andere Kühlmittel wie Öl oder Luft vorstellbar.

Wie aus Figur 1 weiter ersichtlich ist, ist die Leitung 174 der Belüftungsvorrichtung 170 im dargestellten ersten Ausführungsbeispiel der erfindungsgemäßen Gasdruckregelanlage 100 und im dargestellten ersten Ausführungsbeispiel der erfindungsgemäßen Entfeuchtungseinrichtung 400 im Wesentlichen innerhalb des Raumes 110 angeordnet. Lediglich der Abschnitt mit dem Einlass 172 befindet sich außerhalb des Raumes 110.

Wie aus Figur 2 weiter ersichtlich ist, ist die Leitung 174 der Belüftungsvorrichtung 170 im dargestellten zweiten Ausführungsbeispiel der erfindungsgemäßen Gasdruckregelanlage 100 und im dargestellten zweiten Ausführungsbeispiel der erfindungsgemäßen Entfeuchtungseinrichtung 400 im Wesentlichen außerhalb des Raumes 110 angeordnet. Lediglich der Abschnitt mit dem Auslass 176 für den Belüftungsfluidstrom 200 befindet sich innerhalb des Raumes 110.

Wie aus Figur 1 und 2 weiter ersichtlich ist, umfasst die Wärmetauschanordnung 180 in den dargestellten Ausführungsbeispielen der erfindungsgemäßen Gasdruckregelanlage 100 und in den dargestellten Ausführungsbeispielen der erfindungsgemäßen Entfeuchtungseinrichtung 400 eine Pumpe 182, welche das die Entspannungskälte transportierende Medium antreibt.

In einem alternativen nicht dargestellten Ausführungsbeispiel der erfindungsgemäßen Gasdruckregelanlage 100 und in einem nicht dargestellten Ausführungsbeispiel der erfindungsgemäßen Entfeuchtungseinrichtung 400 kann die Wärmetauschanordnung 180 optional oder alternativ ein Wärmerohr, auch als Heatpipe bekannt, umfassen.

In einem alternativen nicht dargestellten Ausführungsbeispiel der Gasdruckregelanlage 100 und in einem nicht dargestellten Ausführungsbeispiel der erfindungsgemäßen Entfeuchtungseinrichtung 400 kann auf die Pumpe 182 verzichtet werden, wenn die Regelanordnung 140 über dem Abschnitt mit dem Einlass 172 platziert werden kann. Dies ist z.B. bei einer zweistöckigen oder mehrstöckigen Ausführung der Fall. Hierbei können thermodynamische Eigenschaften von Fluiden mit unterschiedlichen Temperaturen als Antrieb für das Kühlmittel ausgenutzt werden.

Wie aus Figur 1 und 2 weiter ersichtlich ist, umfasst das dargestellte Ausführungsbeispiel der Wärmetauschanordnung 180 einen Kopplungsbereich 189 mit der Belüftungsvorrichtung 170 und einen Kopplungsbereich 188 mit der Niederdruckleitung 150. Die Entfeuchtung des Belüftungsfluides 200 erfolgt nahe des Kopplungsbereichs 189 der Wärmetauschanordnung 180 mit der Belüftungsvorrichtung 170 durch Abkühlen des Belüftungsfluidstroms 200.

Wie aus Figur 1 weiter ersichtlich ist, ist der Kopplungsbereich 189 der Wärmetauschanordnung 180 mit der Belüftungsvorrichtung 170 im dargestellten ersten Ausführungsbeispiel der erfindungsgemäßen Gasdruckregelanlage 100 und im dargestellten ersten Ausführungsbeispiel der erfindungsgemäßen Entfeuchtungseinrichtung 400 an einem Abschnitt der Leitung 174 angeordnet, welcher sich innerhalb des Raumes 110 befindet. Das Kondenswasser 300 strömt innerhalb der Leitung 174 zum Auslass 176, 178, welcher für den abgekühlten und entfeuchteten Belüftungsfluidstrom 200 und für das Kondenswasser 300 vorgesehen ist.

Wie aus Figur 2 weiter ersichtlich ist, ist der Kopplungsbereich 189 der Wärmetauschanordnung 180 mit der Belüftungsvorrichtung 170 im dargestellten zweiten Ausführungsbeispiel der erfindungsgemäßen Gasdruckregelanlage 100 und im dargestellten zweiten Ausführungsbeispiel der erfindungsgemäßen Entfeuchtungseinrichtung 400 an einem Abschnitt der Leitung 174 angeordnet, welcher sich außerhalb des Raumes 110 befindet. Das Kondenswasser 300 fließt innerhalb der Leitung 174 zum Auslass 178, welcher für das Kondenswasser 300 vorgesehen ist. Dieser Auslass 178 ist außerhalb des Raumes 110 angeordnet. Die Leitung 174 umfasst einen weiteren Auslass 176, welcher für den abgekühlten und entfeuchteten Belüftungsfluidstrom 200 vorgesehen ist, und welcher in den Innenbereich 112 ragt.

Wie aus Figur 1 und 2 weiter ersichtlich ist, ist die von dem Feuchtegehalt des Belüftungsfluides 200 abhängige Taupunkttemperatur des aus der Belüftungsvorrichtung 170 ausströmenden Belüftungsfluidstroms 200 in der Größenordnung der Außentemperatur der Niederdruckleitung 150. Durch Variation weiterer Parameter kann die Taupunkttemperatur des aus der Belüftungsvorrichtung 170 ausströmenden Belüftungsfluidstroms 200 auch kleiner sein als die Außentemperatur der Niederdruckleitung 150. Zusätzlich kann die Taupunkttemperatur des aus der Belüftungsvorrichtung 170 ausströmenden Belüftungsfluidstroms 200 kleiner sein als eine Temperatur, unterhalb welcher ein Hydrat aus dem Gasstrom in der Niederdruckleitung 150 ausfällt.

Wie aus Figur 1 und 2 weiter ersichtlich ist, weist die Wärmetauschanordnung 180 in den dargestellten Ausführungsbeispielen der erfindungsgemäßen Gasdruckregelanlage 100 und in den dargestellten Ausführungsbeispielen der erfindungsgemäßen Entfeuchtungseinrichtung 400 den Kopplungsbereich 189 zum Wärmetausch mit dem Belüftungsfluidstrom 200 innerhalb der den Belüftungsfluidstrom 200 leitenden Leitung 174 auf. Hierbei wird die Entspannungskälte in die Leitung 174 eingeleitet.

In einem alternativen nicht dargestellten Ausführungsbeispiel der erfindungsgemäßen Gasdruckregelanlage 100 und in einem alternativen nicht dargestellten Ausführungsbeispiel der erfindungsgemäßen Entfeuchtungseinrichtung 400 kann die Wärmetauschanordnung 180 den Kopplungsbereich 189 zum Wärmetausch mit dem Belüftungsfluidstrom 200 auch an einer Außenseite der den Belüftungsfluidstrom 200 leitenden Leitung 174 aufweisen. Hierbei wird die Entspannungskälte außen an der Leitung 174 entlang geleitet, wodurch die Leitung 174 in diesem Bereich und der durch diesen Bereich strömende Belüftungsfluidstrom 200 abkühlt werden. Zudem ist eine Ausführung der Wärmetauschanordnung 180 vorstellbar, welche einen Kopplungsbereich 189 zum Wärmetausch mit dem Belüftungsfluidstrom 200 innerhalb der den Belüftungsfluidstrom 200 leitenden Leitung 174 und außerhalb der den Belüftungsfluidstrom 200 leitenden Leitung 174 aufweist.

Wie aus Figur 1 weiter ersichtlich ist, weist die Wärmetauschanordnung 180 im dargestellten ersten Ausführungsbeispiel der erfindungsgemäßen Gasdruckregelanlage 100 und im dargestellten ersten Ausführungsbeispiel der erfindungsgemäßen Entfeuchtungseinrichtung 400 den Kopplungsbereich 188 zum Wärmetausch mit dem Gasstrom innerhalb der Niederdruckleitung 150 auf. Hierbei wird die Entspannungskälte innerhalb der Niederdruckleitung 150 abgeleitet.

Wie aus Figur 2 weiter ersichtlich ist, weist die Wärmetauschanordnung 180 im dargestellten zweiten Ausführungsbeispiel der erfindungsgemäßen Gasdruckregelanlage 100 und im dargestellten zweiten Ausführungsbeispiel der erfindungsgemäßen Entfeuchtungseinrichtung 400 den Kopplungsbereich 188 zum Wärmetausch mit dem Gasstrom außerhalb der Niederdruckleitung 150 auf. Hierbei wird die Entspannungskälte außerhalb der Niederdruckleitung 150 abgeleitet.

In einem alternativen nicht dargestellten Ausführungsbeispiel der erfindungsgemäßen Gasdruckregelanlage 100 und in einem nicht dargestellten Ausführungsbeispiel der erfindungsgemäßen Entfeuchtungseinrichtung 400, kann die Wärmetauschanordnung 180 den Kopplungsbereich 188 zum Wärmetausch mit dem Gasstrom innerhalb der Niederdruckleitung 150 und außerhalb der Niederdruckleitung aufweisen.

Eine weiteres nicht dargestelltes Ausführungsbeispiel der erfindungsgemäßen Gasdruckregelanlage 100 und ein weiteres nicht dargestelltes Ausführungsbeispiel der erfindungsgemäßen Entfeuchtungseinrichtung 400, kann die Wärmetauschanordnung 180 mit dem Kopplungsbereich 189 zum Wärmetausch mit dem Belüftungsfluidstrom 200 an der Außenseite, der den Belüftungsfluidstrom 200 leitenden, Leitung 174 und die Wärmetauschanordnung 180 mit den Kopplungsbereich 188 zum Wärmetausch mit dem Gasstrom außerhalb der Niederdruckleitung 150 aufweisen.

Wie aus Figur 1 und 2 weiter ersichtlich ist, ist in den dargestellten Ausführungsbeispielen der erfindungsgemäßen Gasdruckregelanlage 100 und in den dargestellten Ausführungsbeispielen der erfindungsgemäßen Entfeuchtungseinrichtung 400 eine Kondensatsammel- und/oder Ableitanordnung 186 für auskondensierte Flüssigkeit 300 vorgesehen, welche aus dem Belüftungsfluidstrom 200 auskondensierte Flüssigkeit 300 insbesondere im Bereich der Belüftungsvorrichtung 170 auffängt.

Wie aus Figur 1 weiter ersichtlich ist, ist Kondensatsammel- und/oder Ableitanordnung 186 im dargestellten ersten Ausführungsbeispiel der erfindungsgemäßen Gasdruckregelanlage 100 und im dargestellten ersten Ausführungsbeispiel der erfindungsgemäßen Entfeuchtungseinrichtung 400 im Innenbereich 112 angeordnet und leitet die aus dem Auslass 178 austretende Flüssigkeit 300 über eine Leitung nach außen. Hierbei ist der Auslass 178 der Belüftungsvorrichtung 170 so ausgerichtet, dass die Flüssigkeit 300 durch die Schwerkraft nach unten in einen Einlass der Kondensatsammel- und/oder Ableitanordnung 186 tropft oder fließt. Der Auslass 178 bzw. Einlass kann hierbei trichterförmig ausgeführt sein. In einer alternativen Ausführung kann die Kondensatsammel- und/oder Ableitanordnung 186 die Flüssigkeit im Innenbereich 112 sammeln.

Wie aus Figur 2 weiter ersichtlich ist, ist Kondensatsammel- und/oder Ableitanordnung 186 im dargestellten zweiten Ausführungsbeispiel der erfindungsgemäßen Gasdruckregelanlage 100 und im dargestellten zweiten Ausführungsbeispiel der erfindungsgemäßen Entfeuchtungseinrichtung 400 außerhalb des Raums 110 angeordnet und leitet die aus dem Auslass 178 austretende Flüssigkeit 300 über eine Leitung von dem Raum weg. Hierbei ist der Auslass 178 der Belüftungsvorrichtung 170 so ausgerichtet, dass die Flüssigkeit 300 durch die Schwerkraft nach unten in den Einlass der Kondensatsammel- und/oder Ableitanordnung 186 tropft oder fließt. Der Auslass 178 ist, hierbei beispielsweise trichterförmig ausgeführt. Optional oder alternativ kann auch der Einlass trichterförmig ausgeführt sein. In einer alternativen Ausführung kann die Kondensatsammel- und/oder Ableitanordnung 186 die Flüssigkeit auch in den Innenbereich 112 leiten, um diese dort in einem geeigneten Behälter zu sammeln.

Durch die Kondensatsammel- und/oder Ableitanordnung 186 wird eine Pfützenbildung im Innenbereich 112 vermieden. Die Flüssigkeit wird beispielsweise in ein Abwasserrohr oder in eine Zisterne geleitet.

Wie aus Figur 1 und 2 weiter ersichtlich ist, ist die Hochdruckleitung 130 in den dargestellten Ausführungsbeispielen der erfindungsgemäßen Gasdruckregelanlage 100 und in den dargestellten Ausführungsbeispielen der erfindungsgemäßen Entfeuchtungseinrichtung 400 mit einer Vorwärmvorrichtung 120 gekoppelt, welche vorgesehen ist, den Gasstrom in der Hochdruckleitung 130 auf eine vorgegebene Vorheiztemperatur zu erwärmen. Die Vorheiztemperatur ist hierbei von der Taupunkttemperatur des aus der Belüftungsvorrichtung 170 ausströmenden Belüftungsfluidstroms 200 und/oder von der Temperatur, unterhalb welcher das Hydrat im Niederdruckbereich aus dem Gas ausfällt, abhängig. Da die Taupunkttemperatur des Belüftungsfluidstroms 200 durch das Reduzieren des Feuchtegehalts niedriger ist als die Außentemperatur der Niederdruckleitung 150 oder niedriger als die Temperatur, unterhalb welcher das Hydrat im Niederdruckbereich aus dem Gas ausfällt, kann die Vorheiztemperatur zweckmäßig an die Temperatur angepasst sein, unterhalb welcher das Hydrat im Niederdruckbereich aus dem Gas ausfällt. Diese Temperatur kann bei Temperaturen von unter 0°C liegen. Hierbei ist die Vorheiztemperatur so gewählt, dass nach dem Entspannen des Gases eine Temperatur von über 0°C beispielsweise 1°C in der Niederdruckleitung 150 herrscht. Für den Fall, dass die Wärmetauschanordnung 180 ausfällt oder die Entfeuchtung des Belüftungsfluidstrom 200 aus anderen Gründen nicht stattfindet, kann die Vorheiztemperatur an die aus dem aktuellen Feuchtegehalt resultierenden Taupunkttemperatur des Belüftungsfluidstrom 200 angepasst werden. Durch das Vorheizen des Gasstroms kann das Ausfallen von Hydrat und das Bilden von Kondenswasser sowie das Einfrieren von Elementen der Regelanordnung 140 effektiv unterbunden werden.

Da die Taupunkttemperatur des aus der Belüftungsvorrichtung 170 ausströmenden Belüftungsfluidstrom 200 durch die Entfeuchtung abgesenkt ist und die Vorheiztemperatur entsprechend abgesenkt ist, kann der Energiebedarf der Vorwärmvorrichtung 120 reduziert werden.

In einem alternativen nicht dargestellten Ausführungsbeispiel der erfindungsgemäßen Gasdruckregelanlage 100 und in einem nicht dargestellten Ausführungsbeispiel der erfindungsgemäßen Entfeuchtungseinrichtung 400 ist mindestens eine Sensoranordnung zur Erfassung eines Feuchtegehalts in der Belüftungsvorrichtung 170 in Strömungsrichtung nach dem Kopplungsbereich 189 der Wärmetauschanordnung 180 vorgesehen. Dadurch kann überprüft werden, ob die Entfeuchtung erfolgt ist. Zudem kann die Vorheiztemperatur der Vorwärmvorrichtung 120 gegebenenfalls angepasst werden. Optional oder alternativ ist mindestens eine Sensoranordnung zur Erfassung eines Feuchtegehalts des Gasstroms in der Hochdruckleitung 130 vorgesehen. Auch in diesem Fall kann die Vorheiztemperatur der Vorwärmvorrichtung 120 gegebenenfalls angepasst werden. Zusätzlich oder alternativ kann mindestens eine Sensoranordnung zur Erfassung eines Feuchtegehalts der Raumluft vorgesehen sein. Hierbei kann eine Erhöhung des Feuchtegehalts ermittelt werden, welche beispielsweise durch das Einströmen von Umgebungsluft in den Innenbereich durch eine Türe oder ein Fenster verursacht wird. Der Feuchtegehalt der Umgebungsluft kann abhängig von Wetter und Jahreszeit stark schwanken.

Eine nicht dargestellte Auswerte- und Steuereinheit ist zur Anpassung der aktuellen Vorheiztemperatur vorgesehen, wobei die Auswerte- und Steuereinheit mit der wenigstens einen Sensoranordnung zur Erfassung des Feuchtegehalts gekoppelt ist und aus dem aktuell erfassten jeweiligen Feuchtegehalt des Gasstroms in der Hochdruckleitung 130 oder des aus der Belüftungsvorrichtung 170 ausgelassenen Belüftungsfluidstroms 200 oder der Raumluft die korrespondierende Taupunkttemperatur des Gasstroms und/oder des Belüftungsluftstroms 200 und/oder der Raumluft ermittelt. Zudem kann die Auswerte- und Steuereinheit die aktuelle Gasdruckdifferenz zwischen Hochdruckleitung 130 und Niederdruckleitung 150 sowie eine aktuelle Raumtemperatur bei der Anpassung der der Vorheiztemperatur berücksichtigen. Des Weiteren kann wenigstens ein Heizelement zur Erwärmung des entfeuchteten Belüftungsfluides 200 vorgesehen sein. Diese Heizelemente können im Innenbereich 112 und vorteilhaft am Auslass 176 der Belüftungsvorrichtung 170 angeordnet sein. Die Auswerte- und Steuereinheit kann diese Heizelemente im Innenbereich 112 steuern um eine Raumtemperatur oder die Temperatur des aus der Belüftungsvorrichtung 170 ausströmenden Belüftungsfluidstroms 200 zu beeinflussen, wodurch die relative Luftfeuchtigkeit des Belüftungsfluidstroms 200 beinflussbar ist.

Bei einem nicht dargestellten Verfahren zum Betreiben einer solchen Gasdruckregelanlage 100 mit einer Belüftungsvorrichtung 170 zur Zufuhr eines Belüftungsfluides 200, insbesondere von Umgebungsluft, sowie einer Hochdruckleitung 130, einer Niederdruckleitung 150 und einer strömungsmäßig zwischen der Hochdruckleitung 130 und der Niederdruckleitung 150 angeordneten Regelanordnung 140, wobei ein Gasdruck eines Gases in der Hochdruckleitung 130 größer ist als ein Gasdruck des Gases in der Niederdruckleitung 150, wird in einem Verfahrensschritt das Gas von der Hochdruckleitung 130 in die Niederdruckleitung 150 geleitet wobei beim Reduzieren des Gasdrucks zwischen Hochdruckleitung 130 und Niederdruckleitung 150 eine Entspannungskälte entsteht.

Erfindungsgemäß wird in einem zusätzlichen Verfahrensschritt das Belüftungsfluid in der Belüftungsvorrichtung durch die Entspannungskälte des Gases in der Niederdruckleitung entfeuchtet.

In einem weiteren Verfahrensschritt wird das Gas in der Hochdruckleitung 130 auf eine vorgegebene Vorheiztemperatur erwärmt. Hierbei ist die Vorheiztemperatur insbesondere von der Taupunkttemperatur des aus der Belüftungsvorrichtung 170 ausströmenden Belüftungsfluidstroms 200 und/oder von der Temperatur, unterhalb welcher das Hydrat in der Niederdruckleitung 150 aus dem Gas ausfällt, abhängig.

In einem weiteren Verfahrensschritt wird die Entspannungskälte in eine den Belüftungsfluidstrom 200 leitende Leitung 174 eingeleitet. Alternativ wird die Entspannungskälte außen an der Leitung 174 entlang geleitet. Alternativ wird die Entspannungskälte in die Leitung 174 eingeleitet und außen an der Leitung 174 entlang geleitet.

In einem weiteren Verfahrensschritt wird die auskondensierte Flüssigkeit 300 insbesondere im Bereich der Belüftungsvorrichtung 170 aufgefangen und/oder gesammelt und/oder weggeleitet.

In einem weiteren zusätzlichen Verfahrensschritt wird ein Feuchtegehalt des aus der Belüftungsvorrichtung 170 ausströmenden Belüftungsfluidstroms 200 und/oder ein Feuchtegehalt des Gasstroms in der Hochdruckleitung 130 ermittelt und daraus die jeweilige korrespondierende Taupunkttemperatur abgeschätzt. Zusätzlich kann der Feuchtegehalt der Raumluft innerhalb des Raums 110 ermittelt und daraus die Taupunkttemperatur der Raumluft abgeschätzt werden.

In einem weiteren Verfahrensschritt wird die aktuelle Vorheiztemperatur an die aktuell abgeschätzte Taupunkttemperatur des Belüftungsfluidstroms 200 und/oder an die Taupunkttemperatur des Gasstroms anpasst. Des Weiteren kann die Vorheiztemperatur an die Taupunkttemperatur der Raumluft angepasst werden.

### Bezugszeichen

- 100: Gasdruckregelanlage
- 110: Raum
- 112: Innenbereich
- 120: Vorwärmvorrichtung
- 130: Hochdruckleitung
- 140: Regelanordnung
- 150: Niederdruckleitung
- 160: Entlüftungsvorrichtung
- 162: Auslass
- 170: Belüftungsvorrichtung
- 172: Einlass
- 174: Leitung
- 176: Auslass
- 178: Auslass
- 180: Wärmetauschanordnung
- 182: Pumpe
- 184: Leitung
- 186: Kondensatsammel- und/oder Ableitanordnung
- 188, 189: Kopplungsbereich
- 200: Belüftungsfluidstrom
- 300: Kondenswasser
- 400: Entfeuchtungseinrichtung für eine Gasdruckregelanlage

## Patentansprüche

1. Gasdruckregelanlage (100) mit einer Belüftungsvorrichtung (170) zur Zufuhr eines Belüftungsfluides (200), insbesondere Umgebungsluft, sowie einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasstrom bestimmungsgemäß von der Hochdruckleitung (130) in die Niederdruckleitung (150) strömt und ein Gasdruck des Gasstroms in der Hochdruckleitung (130) größer ist als ein Gasdruck des Gasstroms in der Niederdruckleitung (150), wobei beim Übergang des Gasstroms von der Hochdruckleitung (130) in die Niederdruckleitung (150) eine Entspannungskälte entsteht,
**dadurch gekennzeichnet, dass**
die Belüftungsvorrichtung (170) und die Niederdruckleitung (150) mit einer Wärmetauschanordnung (180) so gekoppelt sind, dass die Entspannungskälte eine Verminderung des Feuchtegehalts des Belüftungsfluides (200) im Bereich der Belüftungsvorrichtung (170) bewirkt.

2. Gasdruckregelanlage nach Anspruch 1, **dadurch gekennzeichnet, dass** die Wärmetauschanordnung (180) einen Kopplungsbereich (189) mit der Belüftungsvorrichtung (170) und einen Kopplungsbereich (188) mit der Niederdruckleitung (150) umfasst, wobei das bei der Entfeuchtung entstehende Kondenswasser (300) aus dem Strom des Belüftungsfluides (200) nahe des Kopplungsbereichs (189) der Wärmetauschanordnung (180) mit der Belüftungsvorrichtung (170) auskondensiert.

3. Gasdruckregelanlage nach Anspruch 1 oder 2, **dadurch gekennzeichnet, dass** die von dem Feuchtegehalt des Belüftungsfluides (200) abhängige Taupunkttemperatur des aus der Belüftungsvorrichtung (170) ausströmenden Stroms des Belüftungsfluides (200) kleiner ist als eine Temperatur, unterhalb welcher ein Hydrat, insbesondere Methanhydrat, aus dem Gasstrom in der Niederdruckleitung (150) ausfällt, und/oder kleiner ist als die Außentemperatur der Niederdruckleitung (150).

4. Gasdruckregelanlage nach einem der vorhergehenden Ansprüche, **dadurch gekennzeichnet, dass** die Hochdruckleitung (130) mit einer Vorwärmvorrichtung (120) gekoppelt ist, welche vorgesehen ist, den Gasstrom in der Hochdruckleitung (130) auf eine vorgegebene Vorheiztemperatur zu erwärmen, insbesondere wobei die Vorheiztemperatur von der Taupunkttemperatur des aus der Belüftungsvorrichtung (170) ausströmenden Belüftungsfluidstrom (200) und/oder von der Temperatur, unterhalb welcher das Hydrat im Niederdruckbereich aus dem Gas ausfällt, abhängig ist.

5. Gasdruckregelanlage nach einem der vorhergehenden Ansprüche, **dadurch gekennzeichnet, dass** die Wärmetauschanordnung (180) den Kopplungsbereich (189) zum Wärmetausch mit dem Belüftungsfluidstrom (200) innerhalb einer den Belüftungsfluidstrom (200) leitenden Leitung (174) aufweist und/oder die Wärmetauschanordnung (180) den Kopplungsbereich (188) mit der Niederdruckleitung (150) innerhalb der Niederdruckleitung (150) aufweist,
und/oder
dass die Wärmetauschanordnung (180) den Kopplungsbereich (189) zum Wärmetausch mit dem Belüftungsfluidstrom (200) an einer Außenseite der den Belüftungsfluidstrom (200) leitenden Leitung (174) aufweist, und/oder die Wärmetauschanordnung (180) den Kopplungsbereich (188) mit der Niederdruckleitung (150) an einer Außenseite der Niederdruckleitung (150) aufweist.

6. Gasdruckregelanlage nach einem der vorhergehenden Ansprüche, **dadurch gekennzeichnet, dass** die Wärmetauschanordnung (180) eine Pumpe (182) umfasst, welche ein die Entspannungskälte transportierendes Medium antreibt,
und/oder
dass die Wärmetauschanordnung (180) ein Wärmerohr umfasst.

7. Gasdruckregelanlage nach einem der vorhergehenden Ansprüche, **dadurch gekennzeichnet, dass** eine Kondensatsammelanordnung und/oder Ableitanordnung (186) für auskondensierte Flüssigkeit (300) vorgesehen ist, welche aus dem Belüftungsfluidstrom (200) auskondensierte Flüssigkeit (300) insbesondere im Bereich der Belüftungsvorrichtung (170) auffängt.

8. Gasdruckregelanlage nach einem der vorhergehenden Ansprüche, **dadurch gekennzeichnet, dass** mindestens eine Sensoranordnung zur Erfassung eines Feuchtegehalts in der Belüftungsvorrichtung (170) in Strömungsrichtung nach dem Kopplungsbereich (189) der Wärmetauschanordnung (180) vorgesehen ist und/oder mindestens eine Sensoranordnung zur Erfassung eines Feuchtegehalts des Gasstroms in der Hochdruckleitung (130) vorgesehen ist.

9. Gasdruckregelanlage nach Anspruch 8, **dadurch gekennzeichnet, dass** eine Auswerte- und Steuereinheit zur Anpassung einer aktuellen Vorheiztemperatur vorgesehen ist, wobei die Auswerte- und Steuereinheit mit der wenigstens einen Sensoranordnung zur Erfassung des Feuchtegehalts gekoppelt ist und aus dem aktuell erfassten jeweiligen Feuchtegehalt des Gasstroms in der Hochdruckleitung (130) oder des aus der Belüftungsvorrichtung (170) ausgelassenen Belüftungsfluidstroms (200) die korrespondierende Taupunkttemperatur des Gasstroms und/oder des Belüftungsluftstroms (200) ermittelt.

10. Gasdruckregelanlage nach einem der vorhergehenden Ansprüche, **dadurch gekennzeichnet, dass** wenigstens ein Heizelement zur Erwärmung des entfeuchteten Belüftungsfluides (200) vorgesehen ist.

11. Entfeuchtungseinrichtung (400) für eine Gasdruckregelanlage (100) mit einer Belüftungsvorrichtung (170) zur Zufuhr eines Belüftungsfluides (200), insbesondere Umgebungsluft, sowie einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasstrom bestimmungsgemäß von der Hochdruckleitung (130) in die Niederdruckleitung (150) strömt und ein Gasdruck des Gasstroms in der Hochdruckleitung (130) größer ist als ein Gasdruck des Gasstroms in der Niederdruckleitung (150), wobei beim Übergang des Gasstroms von der Hochdruckleitung (130) in die Niederdruckleitung (150) eine Entspannungskälte entsteht,
wobei die Belüftungsvorrichtung (170) und die Niederdruckleitung (150) mit einer Wärmetauschanordnung (180) so gekoppelt sind, dass die Entspannungskälte eine Verminderung des Feuchtegehalts des Belüftungsfluides (200) im Bereich der Belüftungsvorrichtung (170) bewirkt.

12. Entfeuchtungseinrichtung nach Anspruch 11, wobei die Wärmetauschanordnung (180) einen Kopplungsbereich (189) mit der Belüftungsvorrichtung (170) und einen Kopplungsbereich (188) mit der Niederdruckleitung (150) umfasst, wobei das bei der Entfeuchtung entstehende Kondenswasser (300) aus dem Strom des Belüftungsfluides (200) nahe des Kopplungsbereichs (189) der Wärmetauschanordnung (180) mit der Belüftungsvorrichtung (170) auskondensiert,
und/oder
wobei die Wärmetauschanordnung (180) den Kopplungsbereich (189) zum Wärmetausch mit dem Belüftungsfluidstrom (200) innerhalb einer den Belüftungsfluidstrom (200) leitenden Leitung (174) aufweist und/oder die Wärmetauschanordnung (180) den Kopplungsbereich (188) mit der Niederdruckleitung (150) innerhalb der Niederdruckleitung (150) aufweist.

13. Entfeuchtungseinrichtung nach einem der Ansprüche 11 bis 12, wobei die Wärmetauschanordnung (180) den Kopplungsbereich (189) zum Wärmetausch mit dem Belüftungsfluidstrom (200) an einer Außenseite der den Belüftungsfluidstrom (200) leitenden Leitung (174) aufweist, und/oder die Wärmetauschanordnung (180) den Kopplungsbereich (188) mit der Niederdruckleitung (150) an einer Außenseite der Niederdruckleitung (150) aufweist.

14. Entfeuchtungseinrichtung nach einem der Ansprüche 11 bis 13, wobei die Wärmetauschanordnung (180) eine Pumpe (182) umfasst, welche ein die Entspannungskälte transportierendes Medium antreibt,
und/oder wobei die Wärmetauschanordnung (180) ein Wärmerohr umfasst.

15. Verfahren zum Betreiben einer Gasdruckregelanlage (100) mit einer Belüftungsvorrichtung (170) zur Zufuhr eines Belüftungsfluides (200), insbesondere von Umgebungsluft, sowie einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasdruck eines Gases in der Hochdruckleitung (130) größer ist als ein Gasdruck des Gases in der Niederdruckleitung (150), wobei das Gas von der Hochdruckleitung (130) in die Niederdruckleitung (150) geleitet wird und beim Übergang des Gasstroms von der Hochdruckleitung (130) in die Niederdruckleitung (150) eine Entspannungskälte entsteht,
**dadurch gekennzeichnet, dass**
das Belüftungsfluid (200) in der Belüftungsvorrichtung (170) durch die Entspannungskälte des Gases in der Niederdruckleitung (150), insbesondere im Bereich der Belüftungsvorrichtung (170), entfeuchtet wird.

16. Verfahren nach Anspruch 15, **dadurch gekennzeichnet, dass** das Gas in der Hochdruckleitung (130) auf eine vorgegebene Vorheiztemperatur erwärmt wird, insbesondere wobei die Vorheiztemperatur von der Taupunkttemperatur des aus der Belüftungsvorrichtung (170) ausströmenden Belüftungsfluidstroms (200) und/oder von der Temperatur, unterhalb welcher das Hydrat in der Niederdruckleitung (150) aus dem Gas ausfällt, abhängig ist.

17. Verfahren nach Anspruch 15 oder 16, **dadurch gekennzeichnet, dass** die Entspannungskälte in eine den Belüftungsfluidstrom (200) leitende Leitung (174) eingeleitet und/oder außen an der Leitung (174) entlang geleitet wird.

18. Verfahren nach einem der Ansprüche 15 bis 17, **dadurch gekennzeichnet, dass** die auskondensierte Flüssigkeit (300) insbesondere im Bereich der Belüftungsvorrichtung (170) aufgefangen und/oder gesammelt und/oder weggeleitet wird.

19. Verfahren nach einem der Ansprüche 15 bis 18, **dadurch gekennzeichnet, dass** ein Feuchtegehalt des aus der Belüftungsvorrichtung (170) ausströmenden Belüftungsfluidstroms (200) und/oder ein Feuchtegehalt des Gasstroms in der Hochdruckleitung (130) ermittelt und daraus die jeweilige korrespondierende Taupunkttemperatur abgeschätzt wird.

20. Verfahren nach einem der Ansprüche 15 bis 19, **dadurch gekennzeichnet, dass** die aktuelle Vorheiztemperatur an die aktuell abgeschätzte Taupunkttemperatur des Belüftungsfluidstroms (200) und/oder an die Taupunkttemperatur des Gasstroms anpasst wird.

## Geänderte Patentansprüche

### Geänderte Patentansprüche gemäss Regel 137(2) EPÜ.

1. Gasdruckregelanlage (100) mit einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasstrom bestimmungsgemäß von der Hochdruckleitung (130) in die Niederdruckleitung (150) strömt und ein Gasdruck des Gasstroms in der Hochdruckleitung (130) größer ist als ein Gasdruck des Gasstroms in der Niederdruckleitung (150), wobei beim Übergang des Gasstroms von der Hochdruckleitung (130) in die Niederdruckleitung (150) eine Entspannungskälte entsteht,
**dadurch gekennzeichnet, dass**
die Hochdruckleitung (130), die Niederdruckleitung (150) und die strömungsmäßig zwischen der Hochdruckleitung (130) und der Niederdruckleitung (150) angeordnete Regelanordnung (140) in einem Raum angeordnet sind, wobei eine Belüftungsvorrichtung (170) den Raum mit einem Belüftungsfluid, insbesondere mit Umgebungsluft, belüftet, wobei
die Belüftungsvorrichtung (170) und die Niederdruckleitung (150) mit einer Wärmetauschanordnung (180) gekoppelt sind,
wobei die Wärmetauschanordnung (180) einen Kopplungsbereich (189) mit der Belüftungsvorrichtung (170) und einen Kopplungsbereich (188) mit der Niederdruckleitung (150) umfasst, wobei
die Entspannungskälte eine Verminderung des Feuchtegehalts des Belüftungsfluides (200) im Bereich der Belüftungsvorrichtung (170) bewirkt, wobei bei einer Entfeuchtung entstehendes Kondenswasser (300) aus dem Strom des Belüftungsfluides (200) nahe des Kopplungsbereichs (189) der Wärmetauschanordnung (180) mit der Belüftungsvorrichtung (170) auskondensiert.

2. Gasdruckregelanlage nach Anspruch 1, **dadurch gekennzeichnet, dass** die von dem Feuchtegehalt des Belüftungsfluides (200) abhängige Taupunkttemperatur des aus der Belüftungsvorrichtung (170) ausströmenden Stroms des Belüftungsfluides (200) kleiner ist als eine Temperatur, unterhalb welcher ein Hydrat, insbesondere Methanhydrat, aus dem Gasstrom in der Niederdruckleitung (150) ausfällt, und/oder kleiner ist als die Außentemperatur der Niederdruckleitung (150).

3. Gasdruckregelanlage nach einem der vorhergehenden Ansprüche, **dadurch gekennzeichnet, dass** die Hochdruckleitung (130) mit einer Vorwärmvorrichtung (120) gekoppelt ist, welche vorgesehen ist, den Gasstrom in der Hochdruckleitung (130) auf eine vorgegebene Vorheiztemperatur zu erwärmen.

4. Gasdruckregelanlage nach einem der vorhergehenden Ansprüche, **dadurch gekennzeichnet, dass** die Wärmetauschanordnung (180) den Kopplungsbereich (189) zum Wärmetausch mit dem Belüftungsfluidstrom (200) innerhalb einer den Belüftungsfluidstrom (200) leitenden Leitung (174) aufweist
und/oder die Wärmetauschanordnung (180) den Kopplungsbereich (188) mit der Niederdruckleitung (150) innerhalb der Niederdruckleitung (150) aufweist, und/oder dass die Wärmetauschanordnung (180) den Kopplungsbereich (189) zum Wärmetausch mit dem Belüftungsfluidstrom (200) an einer Außenseite der den Belüftungsfluidstrom (200) leitenden Leitung (174) aufweist,
und/oder die Wärmetauschanordnung (180) den Kopplungsbereich (188) mit der Niederdruckleitung (150) an einer Außenseite der Niederdruckleitung (150) aufweist.

5. Gasdruckregelanlage nach einem der vorhergehenden Ansprüche, **dadurch gekennzeichnet, dass** die Wärmetauschanordnung (180) eine Pumpe (182) umfasst, welche ein die Entspannungskälte transportierendes Medium antreibt,
und/oder
dass die Wärmetauschanordnung (180) ein Wärmerohr umfasst.

6. Gasdruckregelanlage nach einem der vorhergehenden Ansprüche, **dadurch gekennzeichnet, dass** eine Kondensatsammelanordnung und/oder Ableitanordnung (186) für auskondensierte Flüssigkeit (300) vorgesehen ist, welche aus dem Belüftungsfluidstrom (200) auskondensierte Flüssigkeit (300) insbesondere im Bereich der Belüftungsvorrichtung (170) auffängt.

7. Gasdruckregelanlage nach einem der vorhergehenden Ansprüche, **dadurch gekennzeichnet, dass** mindestens eine Sensoranordnung zur Erfassung eines Feuchtegehalts in der Belüftungsvorrichtung (170) in Strömungsrichtung nach dem Kopplungsbereich (189) der Wärmetauschanordnung (180) vorgesehen ist und/oder mindestens eine Sensoranordnung zur Erfassung eines Feuchtegehalts des Gasstroms in der Hochdruckleitung (130) vorgesehen ist.

8. Gasdruckregelanlage nach Anspruch 7, **dadurch gekennzeichnet, dass** eine Auswerte- und Steuereinheit zur Anpassung einer aktuellen Vorheiztemperatur vorgesehen ist, wobei die Auswerte- und Steuereinheit mit der wenigstens einen Sensoranordnung zur Erfassung des Feuchtegehalts gekoppelt ist und aus dem aktuell erfassten jeweiligen Feuchtegehalt des Gasstroms in der Hochdruckleitung (130) oder des aus der Belüftungsvorrichtung (170) ausgelassenen Belüftungsfluidstroms (200) die korrespondierende Taupunkttemperatur des Gasstroms und/oder des Belüftungsluftstroms (200) ermittelt.

9. Gasdruckregelanlage nach einem der vorhergehenden Ansprüche, **dadurch gekennzeichnet, dass** wenigstens ein Heizelement zur Erwärmung des entfeuchteten Belüftungsfluides (200) vorgesehen ist.

10. Entfeuchtungseinrichtung (400) für eine Gasdruckregelanlage (100) mit einer Belüftungsvorrichtung (170) zur Zufuhr eines Belüftungsfluides (200), insbesondere Umgebungsluft, sowie einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasstrom bestimmungsgemäß von der Hochdruckleitung (130) in die Niederdruckleitung (150) strömt und ein Gasdruck des Gasstroms in der Hochdruckleitung (130) größer ist als ein Gasdruck des Gasstroms in der Niederdruckleitung (150), wobei beim Übergang des Gasstroms von der Hochdruckleitung (130) in die Niederdruckleitung (150) eine Entspannungskälte entsteht,
wobei die Hochdruckleitung (130), die Niederdruckleitung (150) und die strömungsmäßig zwischen der Hochdruckleitung (130) und der Niederdruckleitung (150) angeordnete Regelanordnung (140) in einem Raum angeordnet sind, wobei eine Belüftungsvorrichtung (170) den Raum mit einem Belüftungsfluid, insbesondere mit Umgebungsluft, belüftet,
wobei die Belüftungsvorrichtung (170) und die Niederdruckleitung (150) mit einer Wärmetauschanordnung (180) gekoppelt sind,
wobei die Wärmetauschanordnung (180) einen Kopplungsbereich (189) mit der Belüftungsvorrichtung (170) und einen Kopplungsbereich (188) mit der Niederdruckleitung (150) umfasst, wobei
die Entspannungskälte eine Verminderung des Feuchtegehalts des Belüftungsfluides (200) im Bereich der Belüftungsvorrichtung (170) bewirkt,
wobei bei einer Entfeuchtung entstehendes Kondenswasser (300) aus dem Strom des Belüftungsfluides (200) nahe des Kopplungsbereichs (189) der Wärmetauschanordnung (180) mit der Belüftungsvorrichtung (170) auskondensiert.

11. Entfeuchtungseinrichtung nach Anspruch 10, wobei die Wärmetauschanordnung (180) den Kopplungsbereich (189) zum Wärmetausch mit dem Belüftungsfluidstrom (200) innerhalb einer den Belüftungsfluidstrom (200) leitenden Leitung (174) aufweist und/oder die Wärmetauschanordnung (180) den Kopplungsbereich (188) mit der Niederdruckleitung (150) innerhalb der Niederdruckleitung (150) aufweist.

12. Entfeuchtungseinrichtung nach Anspruch 10 oder 11, wobei die Wärmetauschanordnung (180) den Kopplungsbereich (189) zum Wärmetausch mit dem Belüftungsfluidstrom (200) an einer Außenseite der den Belüftungsfluidstrom (200) leitenden Leitung (174) aufweist, und/oder die Wärmetauschanordnung (180) den Kopplungsbereich (188) mit der Niederdruckleitung (150) an einer Außenseite der Niederdruckleitung (150) aufweist.

13. Entfeuchtungseinrichtung nach einem der Ansprüche 10 bis 12, wobei die Wärmetauschanordnung (180) eine Pumpe (182) umfasst, welche ein die Entspannungskälte transportierendes Medium antreibt,
und/oder wobei die Wärmetauschanordnung (180) ein Wärmerohr umfasst.

14. Verfahren zum Betreiben einer Gasdruckregelanlage (100) mit einer Hochdruckleitung (130), einer Niederdruckleitung (150) und einer strömungsmäßig zwischen der Hochdruckleitung (130) und der Niederdruckleitung (150) angeordneten Regelanordnung (140), wobei ein Gasdruck eines Gases in der Hochdruckleitung (130) größer ist als ein Gasdruck des Gases in der Niederdruckleitung (150), wobei das Gas von der Hochdruckleitung (130) in die Niederdruckleitung (150) geleitet wird und beim Übergang des Gasstroms von der Hochdruckleitung (130) in die Niederdruckleitung (150) eine Entspannungskälte entsteht,
**dadurch gekennzeichnet, dass**
einem Raum, in welchem die Hochdruckleitung (130), die Niederdruckleitung (150) und die strömungsmäßig zwischen der Hochdruckleitung (130) und der Niederdruckleitung (150) angeordnete Regelanordnung (140) angeordnet sind, durch eine Belüftungsvorrichtung (170) mit einem Belüftungsfluid, insbesondere mit Umgebungsluft, belüftet wird, wobei das zugeführte Belüftungsfluid (200) in der Belüftungsvorrichtung (170) durch die Entspannungskälte des Gases in der Niederdruckleitung (150), insbesondere im Bereich der Belüftungsvorrichtung (170), entfeuchtet wird.

15. Verfahren nach Anspruch 14, **dadurch gekennzeichnet, dass** das Gas in der Hochdruckleitung (130) auf eine vorgegebene Vorheiztemperatur erwärmt wird, insbesondere wobei die Vorheiztemperatur von der Taupunkttemperatur des aus der Belüftungsvorrichtung (170) ausströmenden Belüftungsfluidstroms (200) und/oder von der Temperatur, unterhalb welcher das Hydrat in der Niederdruckleitung (150) aus dem Gas ausfällt, abhängig ist.

16. Verfahren nach Anspruch 14 oder 15, **dadurch gekennzeichnet, dass** die Entspannungskälte in eine den Belüftungsfluidstrom (200) leitende Leitung (174) eingeleitet und/oder außen an der Leitung (174) entlang geleitet wird.

17. Verfahren nach einem der Ansprüche 14 bis 16, **dadurch gekennzeichnet, dass** die auskondensierte Flüssigkeit (300) insbesondere im Bereich der Belüftungsvorrichtung (170) aufgefangen und/oder gesammelt und/oder weggeleitet wird.

18. Verfahren nach einem der Ansprüche 14 bis 17, **dadurch gekennzeichnet, dass** ein Feuchtegehalt des aus der Belüftungsvorrichtung (170) ausströmenden Belüftungsfluidstroms (200) und/oder ein Feuchtegehalt des Gasstroms in der Hochdruckleitung (130) ermittelt und daraus die jeweilige korrespondierende Taupunkttemperatur abgeschätzt wird.

19. Verfahren nach einem der Ansprüche 14 bis 18, **dadurch gekennzeichnet, dass** die aktuelle Vorheiztemperatur an die aktuell abgeschätzte Taupunkttemperatur des Belüftungsfluidstroms (200) und/oder an die Taupunkttemperatur des Gasstroms anpasst wird.
